# FASCICULE DE BREVET EUROPEEN

(11) **EP 3 573 940 B1**
(45) Date de publication et mention de la délivrance du brevet: **16.06.2021**
(21) Numéro de dépôt: 18704903.6
(22) Date de dépôt: 30.01.2018
(51) Int. Cl.: C04B 35/46, C08G 79/00, C08G 79/08

(54) **POLYAMINOBORANES**
POLYAMINOBORANE
POLYAMINOBORANES

(30) Priorité: 30.01.2017 FR 1750723
(43) Date de publication de la demande: 04.12.2019
(73) Titulaire: Centre National de la Recherche Scientifique, 75794 Paris Cedex 16 (FR); Université de Rennes 1, 35065 Rennes (FR)
(72) Inventeur: ALCARAZ, Gilles, 35700 Rennes (FR); DE ALBUQUERQUE PINHEIRO, Carlos Antonio, Vielha, Lleida 25530 (FR); ROILAND, Claire, 35200 Rennes (FR)
(74) Mandataire: Osha Liang
(86) Numéro de dépôt international: PCT/EP2018/052312
(87) Numéro de publication internationale: WO 2018/138384

(56) Documents cités:
- GB-A- 881 820
- US-A- 3 047 623
- US-A- 5 015 607
- US-A- 5 071 935
- ANTON B. BURG ET AL: "The N-Methyl Derivatives of B 2 H 7 N", JOURNAL OF THE AMERICAN CHEMICAL SOCIETY, vol. 71, no. 10, 1 octobre 1949 (1949-10-01), pages 3451-3455, XP055399143, US ISSN: 0002-7863, DOI: 10.1021/ja01178a056

## Description

### DOMAINE TECHNIQUE

La présente description concerne des polyaminoboranes ; leur procédé de préparation ; leur utilisation pour la préparation d'un précurseur de céramique ou d'une céramique, pour la production de nitrure de bore, pour le stockage et/ou la production de dihydrogène ; ainsi que des précurseurs de céramique, des céramiques, des piles à hydrogène et des matériaux énergétique comprenant lesdits polyaminoboranes.

### ETAT DE L'ART

Les polyaminoboranes, composés répondants à la formule [RR'N-BR''R''']ₓ, sont des composés pouvant être utilisés comme précurseurs de céramiques, telles que les céramiques à base de bore. Les polyaminoboranes étant capables de produire, par exemple thermiquement, du dihydrogène, ces composés peuvent également être utilisés pour le stockage et la production de dihydrogène.

Il est connu qu'un polyaminoborane, tel que le [NH₂-BH₂]ₓ, peut être préparé au moyen d'un procédé comprenant une perte de dihydrogène à partir d'un amine-borane, tel que le borazane (NH₃-BH₃), la perte de dihydrogène se faisant typiquement par voie thermique. Cependant, la déshydrogénation d'un amine-borane par voie thermique est mal maitrisée et ne permet que la production de dimères et de trimères, ainsi que parfois quelques oligomères. On notera par exemple que la décomposition thermique ménagée d'amine-boranes conduit typiquement à la formation du trimère correspondant qui est un cyclotriborazane de formule [RR'NH-BHR''R''']₃ dont typiquement seule la déshydrogénation métallo-catalysée à l'aide d'un catalyseur spécifique permet l'obtention de polymères linéaires correspondants.

Il est connu que la formation d'un polyaminoborane à longue chaine par déshydrogénation d'un amine-borane peut également être effectuée par catalyse organométallique au moyen d'un complexe d'un métal de transition, par exemple à base d'iridium ou de ruthénium.

Par exemple, A Staubitz et al. (« Iridium-Catalyzed Dehydrocoupling of Primary Amine-Borane Adducts: A Route to High Molecular Weight Polyaminoboranes, Boron-Nitrogen Analogues of Polyolefins », Angew. Chem. Int. Ed., 2008, 47, 6212-6215) décrivent notamment une réaction de polymérisation par déshydrogénation de N-méthylborazane (MeNH₂-BH₃) et/ou de N-nbutylborazane (nBuNH₂-BH₃) au moyen d'un catalyseur dans du tétrahydrofurane pour produire des polymères ou copolymères correspondants, *i.e.,* [MeNH-BH₂]ₓ, [nBuNH-BH₂]ₓ et [MeNH-BH₂]ₓ[nBuNH-BH₂]_{y}.

A Staubitz et al. (« Catalytic Dehydrocoupling/Dehydrogenation of N-Methylamine-Borane and Ammonia-Borane: Synthesis and Characterization of High Molecular Weight Polyaminoboranes », J. Am. Chem. Soc., 2010, 132, 13332-13345) décrivent également une réaction de polymérisation par déshydrogénation de borazane ou de N-méthylborazane au moyen d'un catalyseur pour produire des polymères correspondants, *i.e.,* [NH₂-BH₂]ₓ et [MeNH-BH₂]ₓ.

B. L. Dietrich et al. (« Iridium-Catalyzed Dehydrogenation of Substituted Amine Boranes: Kinetics, Thermodynamics, and Implications for Hydrogen Storage », Inorganic Chemistry, 2008, 47, 19, 8583-8585) décrivent une réaction de polymérisation par déshydrogénation de borazane et/ou de N-méthylborazane au moyen d'un catalyseur pour produire des oligomères ou co-oligomères correspondants, *i.e.,* [NH₂-BH₂]ₓ, [MeNH-BH₂]ₓ et [NH₂-BH₂]ₓ[MeNH-BH₂]_{y}

N. E. Subbs et al. (« Amine-borane dehydrogenation chemistry: Metal-free hydrogen transfer, new catalysts and mechanisms, and the synthesis of polyaminoboranes », Journal of Organometallic Chemistry, 2013, 730, 84-89) décrivent une réaction d'hydrogénation catalytique de NN-diisopropylaminoborane (iPr₂N=BH₂) au moyen de N-méthylborazane pour produire du diisopropylamine-borane (*i.e.,* NN-diisopropylborazane ; iPr₂NH-BH₃) et le polyaminoborane [MeNH-BH₂]ₓ sous forme dimérique, oligomérique ou polymérique.

Cependant, les procédés connus ne permettent d'obtenir qu'une gamme limitée de polyaminoboranes. En effet, seuls des polyaminoboranes de formule [NH₂-BH₂]ₓ, [MeNH-BH₂]ₓ, [nBuNH-BH₂]ₓ et [MeNH-BH₂]ₓ[nBuNH-BH₂]_{y} sont répertoriés. De plus, les procédés connus requièrent la formation d'un équivalent de dihydrogène lors de la formation du polyaminoborane. Les procédés connus requièrent également l'utilisation d'un solvant ainsi que l'utilisation d'une activation thermique et/ou d'un catalyseur organométallique. Ces procédés sont ainsi couteux, nécessitent des conditions particulières et ne peuvent être généralisés ce qui les rend peu attractifs. Les polyaminoboranes étant généralement produits par déshydrogénation métallo-catalysée à partir d'amine-boranes correspondants, une limitation supplémentaire liée aux procédés définis ci-dessus est la synthèse des amine-boranes eux-mêmes qui sont typiquement difficiles à préparer et isoler.

En conséquence, il existe un besoin de fournir des polyaminoboranes et leur procédé de préparation permettant de surmonter les limitations citées ci-dessus.

Les documents GB 881 820 A et US 3 047 623 A décrivent la réaction d'aminoboranes avec des amines, conduisant à des composés faisant intervenir le motif BN trois fois dans leur formule, et dans lesquels chaque atome de bore est hybridé sp₂. Les documents US 5 071 607 A et US 5 015 607 A décrivent la formation par coaminolyse d'un produit polymérique comprenant des atomes de bore uniquement hybridés sp₂.

### RESUME

La présente description a pour premier objet de fournir un procédé simple et original pour la préparation de polyaminoboranes. D'une part, le procédé de la présente description permet de s'affranchir de la génération de dihydrogène lors de la préparation de polyaminoboranes. D'autre part, le procédé de la présente description ne requiert ni l'utilisation d'un catalyseur ni l'utilisation d'un solvant pour la formation des polyaminoboranes.

La présente description a pour deuxième objet de fournir une large famille de polyaminoboranes. En effet, le procédé de la présente description permet l'utilisation d'une grande gamme de substrats, y compris des amines fonctionnelles, donnant ainsi accès à des polyaminoboranes fonctionnalisés.

Selon un premier aspect, les objets précités, ainsi que d'autres avantages, sont obtenus par un procédé de préparation d'un polyaminoborane comprenant la réaction d'au moins un monomère avec un aminoborane, dans lequel l'au moins un monomère est choisi parmi le groupe constitué par l'ammoniac, une amine primaire et une hydrazine substituée ou non substituée ; dans lequel l'aminoborane comprend un borane substitué d'un groupe amino secondaire ; dans lequel l'aminoborane répond à la formule R¹R²N-BR³R⁴, le monomère répond à la formule R⁵NH₂ et le polyaminoborane répond à la formule [R⁵NH-BR³R⁴]ₙ, dans lequel R¹ et R² sont des groupes organiques identiques ou différents, linéaires, ramifiés, cycliques ou cycliques et ramifiés, ayant de 2 à 30 atomes de carbones ; ou R¹ et R² forment ensemble un groupe organique cyclique ou cyclique et ramifié, ayant de 2 à 30 atomes de carbones ; dans lequel R³ et R⁴ sont identiques ou différents et choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbones ; ou R³ et R⁴ forment ensemble un groupe organique cyclique ou cyclique et ramifié, ayant de 3 à 30 atomes de carbones ; dans lequel R⁵ est choisi parmi le groupe constitué par un atome d'hydrogène, un atome d'azote substitué ou non substitué et un groupe organique linéaire, ramifié, cyclique ou cyclique et ramifié et ayant de 1 à 30 atomes de carbones ; et dans lequel n est un nombre supérieur à 10.

Selon un deuxième aspect, les objets précités, ainsi que d'autres avantages, sont obtenus par un polyaminoborane comprenant au moins un motif de répétition répondant à la formule R⁵NH-BR³R⁴, dans lequel R³ et R⁴ sont identiques ou différents et sont choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbones ; ou R³ et R⁴ forment ensemble un groupe organique cyclique ou cyclique et ramifié, ayant de 3 à 30 atomes de carbones ; dans lequel R⁵ est choisi parmi le groupe constitué par un atome d'hydrogène, un atome d'azote substitué ou non substitué et un groupe organique linéaire, ramifié, cyclique ou cyclique et ramifié et ayant de 1 à 30 atomes de carbones ; dans lequel si R⁵ est un atome hydrogène ou un méthyle, au moins un de R³ et R⁴ n'est pas un atome d'hydrogène ; et dans lequel si R⁵ est un groupe n-butyle, au moins un de R³ et R⁴ n'est pas un atome d'hydrogène ou le polyaminoborane a une masse molaire moyenne en masse supérieure ou égale à environ 500000.

Selon un troisième aspect, les objets précités, ainsi que d'autres avantages, sont obtenus par une utilisation d'un polyaminoborane selon le deuxième aspect pour la préparation d'un précurseur de céramique ou d'une céramique.

Selon un quatrième aspect, les objets précités, ainsi que d'autres avantages, sont obtenus par une utilisation d'un polyaminoborane selon le deuxième aspect pour la production de nitrure de bore.

Selon un cinquième aspect, les objets précités, ainsi que d'autres avantages, sont obtenus par une utilisation d'un polyaminoborane selon le deuxième aspect pour le stockage et/ou la production de dihydrogène.

Selon un sixième aspect, les objets précités, ainsi que d'autres avantages, sont obtenus par un précurseur de céramique ou céramique comprenant un polyaminoborane selon le deuxième aspect.

Selon un septième aspect, les objets précités, ainsi que d'autres avantages, sont obtenus par une pile à hydrogène ou un matériau énergétique comprenant un polyaminoborane selon le deuxième aspect.

Des modes de réalisation selon les aspects référencés ci-dessus ainsi que des avantages supplémentaires apparaîtront à la lecture de la description illustrée par les Figures suivantes et les revendications annexées.

### BREVE DESCRIPTION DES DESSINS

La Figure 1 représente un schéma illustrant des spectres représentatifs de RMN du solide ¹¹B{¹H} de polyaminoboranes selon des modes de réalisation de la présente description.
Les Figures 2 à 7 représentent des schémas illustrant des analyses thermogravimétriques de polyaminoboranes selon des modes de réalisation de la présente description.

### DESCRIPTION DETAILLEE

Des modes de réalisation de la présente description vont maintenant être décrits en détail. Dans la description détaillée suivante des modes de réalisation de la présente invention, de nombreux détails spécifiques sont exposés afin de fournir une compréhension plus approfondie de la présente description. Cependant, il apparaîtra à l'homme du métier que la présente description peut être mise en œuvre sans ces détails spécifiques. Dans d'autres cas, des caractéristiques bien connues n'ont pas été décrites en détail pour éviter de compliquer inutilement la description.

Dans ce qui suit, le terme « comprendre » est synonyme de (signifie la même chose que) « inclure » et « contenir », et est inclusif ou ouverts et n'exclue pas d'autres éléments non récités. En outre, dans la présente description, les termes « environ », « substantiellement » et « à peu près » sont synonymes de (signifie la même chose que) une marge inférieure et/ou supérieure de 10% de la valeur respective.

Dans ce qui suit, le terme « organique » est synonyme de (signifie la même chose que) un composé hydrocarboné, *i.e.,* un composé comprenant un ou plusieurs atomes de carbone et d'hydrogène.

Dans ce qui suit, le terme « ammoniac » est synonyme de (signifie la même chose que) un composé de formule NH3. Dans ce qui suit, le terme « aminé » est synonyme de (signifie la même chose que) un dérivé de l'ammoniac dans lequel au moins un atome d'hydrogène est remplacé par un groupe carboné. Dans ce qui suit, le terme « amine primaire » est synonyme de (signifie la même chose que) une amine dans lequel un seul atome d'hydrogène est remplacé par un groupe hydrocarboné. Dans ce qui suit, le terme « amino secondaire » est synonyme de (signifie la même chose que) un radical de formule NR¹R² dans lequel R¹ et R² est un groupe hydrocarboné.

Dans ce qui suit, le terme « hydrazine » est synonyme de (signifie la même chose que) un composé chimique de formule NH₂NH₂ et dérivés dans lesquels un ou plusieurs atomes d'hydrogène sont remplacés par un groupe hydrocarboné.

Dans ce qui suit, les termes « amine-borane », « adduit amine-borane » et « borazane » sont synonymes de (signifie la même chose que) un composé chimique de formule NR₃BR₃ dans lequel R est un atome d'hydrogène ou un groupe hydrocarboné, tel que par exemple NH₃BH₃, MeNH₂BH₃ et nBuNH₂BH₃, dans lequel le borane est lié à l'amine, par exemple par une liaison à forte contribution covalente. Un amine-borane peut également être décrit schématiquement selon les mésomères suivants :

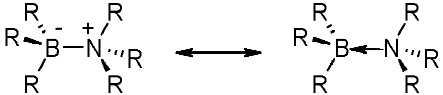

Il est ainsi apparent que l'ammoniac, une amine primaire et une hydrazine sont des composés distincts d'un amine-borane.

Dans ce qui suit, le terme « non substitué » est synonymes de (signifie la même chose que) non substitué d'un atome autre que un ou plusieurs atomes d'hydrogène.

Dans ce qui suit, le terme « substitué » est synonyme de (signifie la même chose que) substitué d'au moins un élément autre qu'un atome d'hydrogène, par exemple substitué d'au moins un substituant hydrocarboné, tel que R^{a}, R^{b}, R^{c} et R^{d}. Selon un ou plusieurs modes de réalisation, l'élément est choisi parmi le groupe constitué par un alkyle, un alcényle, un alcynyle, un aryle, un hétéroaryle, un alkylalcényle, un alcénylalkyle, un alkylalcynyle, un alcynylalkyle, un alkylaryle, un arylalkyle, un alkylhétéroaryle, un hétéroarylalcényle, un alcénylaryle, un alcénylhétéroaryle, un arylalcynyle, un hétéroarylalcynyle, un alcynylaryle et un alcynylhétéroaryle, l'élément comprenant de 1 à 20 atomes de carbone, tel que de 2 à 18, 3 à 16, 4 à 14 ou 5 à 12 atomes de carbones ; lequel élément comprenant optionnellement un ou plusieurs hétéroatomes, tel que par exemple N, O, S, P, Si, Sn, Ge, As, F, Cl, Br et I ; et/ou lequel élément comprenant optionnellement un ou plusieurs groupes fonctionnels choisis parmi la liste constitué par un alkyle, un alcène, un alcyne, un aryle, un hétéroaryle, un alcool, une cétone, un benzoyle, un aldéhyde, un carbonate, un acide carboxylique, un carboxylate, un ester, un éther-oxyde, un hétérocycle, une amine, une amide, un azo, un diazo, un diazoamino, un azoture, une imine secondaire, une hydrazine, une hydrazone, une amidine, un carbamate, une guanidine, une carbodiimide, un nitrile, un isonitrile, un imide, un azide, un diimide, un thiol, un thioether, une thiocétone, un cyanate, un nitrate, un nitrite, un nitro, un nitroso, une oxime, un pyridyl, un thioether, un disulfide, un sulfinyl, un sulfonyl, un thiocyanate, un isothiocyanate, une thione, un phosphorane, une phosphine, un boronate, un borinate, un silane et un halogène, les groupes fonctionnels comprenant de 0 à 20 atomes de carbones, tel que de 1 à 20, 2 à 18, 3 à 16, 4 à 14 ou 5 à 12 atomes de carbones.

Dans ce qui suit, les groupes fonctionnels comprenant un groupe aryle comprennent préférablement au moins 5 atomes de carbones, tel que de 6 à 20 atomes de carbone. Dans ce qui suit, les groupes fonctionnels comprenant un groupe alcényle ou alcynyle comprennent au moins 2 atomes de carbones, tel que de 3 à 20 atomes de carbone. Dans ce qui suit, les groupes fonctionnels comprenant un groupe ramifié comprennent au moins 3 atomes de carbones, tel que de 4 à 20 atomes de carbone. Dans ce qui suit, les groupes fonctionnels comprenant un groupe cyclique comprennent préférablement au moins 3 atomes de carbones, tel que de 4 à 20 ou 5 à 20 atomes de carbone. Dans ce qui suit, les groupes fonctionnels comprenant un groupe cyclique ramifié comprennent préférablement au moins 4 atomes de carbones, tel que de 5 à 20 ou 6 à 20 atomes de carbone.

La présente description concerne un procédé de préparation de polyaminoboranes comprenant la réaction d'au moins un monomère avec un aminoborane. Plus précisément, selon le premier aspect, l'au moins un monomère est choisi parmi le groupe constitué par l'ammoniac, une amine primaire et une hydrazine substituée ou non substituée, l'aminoborane comprenant un borane substitué d'un groupe amino secondaire.

Le procédé selon la présente description permet l'obtention d'une large gamme de polyaminoboranes, lesdits polyaminoboranes pouvant être préparés au moyen d'une étape à la fois simple et originale, sans génération de dihydrogène, sans nécessiter d'utiliser un solvant, un catalyseur et/ou une activation thermique. En effet, le procédé selon la présente description est un procédé facile à mettre en œuvre, sans dégagement de dihydrogène ce qui d'un point de vue de la sécurité est un net avantage. De plus, le procédé selon la présente description ne nécessite l'utilisation d'aucun solvant pouvant devenir un contaminant en fin de procédé. Le procédé selon la présente description ne nécessite pas non plus l'utilisation d'un catalyseur, par exemple à base d'un métal précieux coûteux, difficile à préparer, pouvant être sensible à l'air et/ou l'oxygène et pouvant devenir un contaminant des polyaminoboranes. Le polyaminoborane obtenu est également facile à isoler et purifier et le procédé peut être mis en œuvre avec un grand nombre d'amines primaires et hydrazines, y compris des amines/hydrazines fonctionnelles sans que cela n'influe sur l'issue de la réaction, contrairement aux méthodes métallo-catalysées. Le procédé selon la présente description représente un net avantage supplémentaire en ce qu'il permet d'utiliser directement une simple monomère, tel qu'une amine primaire, par exemple seul, sans solvant, sans catalyseur et/ou sans requérir la formation d'un adduit comprenant le monomère avant la réaction avec l'aminoborane.

Selon un ou plusieurs modes de réalisation, le polyaminoborane est sous forme polymérique et/ou oligomérique. Les polymères obtenus peuvent être de masse bien supérieure à celle des polymères obtenus par les approches métallo-catalysées. Les rendements peuvent également être supérieurs à ceux des approches métallo-catalysées. Il est également possible d'obtenir des polyaminoboranes sous forme oligomériques.

Selon un ou plusieurs modes de réalisation, le polyaminoborane est un copolymère et/ou un co-oligomère. Le procédé peut également être réalisé à partir de mélanges d'ammoniac, d'amines primaires et/ou d'hydrazines pour ainsi conduire à la formation de copolymères, tel que des polymères statistiques.

Selon le premier aspect :
A/ l'aminoborane répond à (e.g. comprend ou consiste en) la formule R¹R²N-BR³R⁴, dans lequel R¹ et R² sont des groupes organiques identiques ou différents, linéaires, ramifiés, cycliques ou cycliques et ramifiés, ayant de 2 à 30 atomes de carbone, tel que de 3 à 24, 4 à 20 ou 5 à 16 atomes de carbones ; ou R¹ et R² forment ensemble un groupe organique cyclique ou cyclique et ramifié, ayant de 2 à 30 atomes de carbone, tel que de 3 à 24, 4 à 20 ou 5 à 16 atomes de carbones ; dans lequel R³ et R⁴ sont identiques ou différents et choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbone, tel que de 2 à 28, 3 à 24, 4 à 20 ou 5 à 16 atomes de carbones ; ou R³ et R⁴ forment ensemble un groupe organique cyclique ou cyclique et ramifié, ayant de 3 à 30 atomes de carbone, tel que de 4 à 20 ou 5 à 16 atomes de carbones ;
B/ le monomère répond à la formule R⁵NH₂, dans lequel R⁵ est choisi parmi le groupe constitué par un atome d'hydrogène, un atome d'azote substitué ou non substitué et un groupe organique linéaire, ramifié, cyclique ou cyclique et ramifié et ayant de 1 à 30 atomes de carbone, tel que de 2 à 28, 3 à 24, 4 à 20 ou 5 à 16 atomes de carbones ;
C/ le polyaminoborane comprend au moins un motif de répétition répondant à la formule R⁵NH-BR³R⁴, dans lequel R³ et R⁴ sont identiques ou différents et sont choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbones, tel que de 2 à 28, 3 à 24, 4 à 20 ou 5 à 16 atomes de carbones ; ou R³ et R⁴ forment ensemble un groupe organique cyclique ou cyclique et ramifié, ayant de 3 à 30 atomes de carbones, tel que de 4 à 20 ou 5 à 16 atomes de carbones ; dans lequel R⁵ est choisi parmi le groupe constitué par un atome d'hydrogène, un atome d'azote substitué ou non substitué et un groupe organique linéaire, ramifié, cyclique ou cyclique et ramifié et ayant de 1 à 30 atomes de carbone, tel que de 2 à 28, 3 à 24, 4 à 20 ou 5 à 16 atomes de carbones ;
D/ le polyaminoborane répond à la formule [R⁵NH-BR³R⁴]ₙ, dans lequel R³ et R⁴ sont identiques ou différents et choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbone, tel que de 2 à 28, 3 à 24, 4 à 20 ou 5 à 16 atomes de carbones ; ou R³ et R⁴ forment ensemble un groupe organique cyclique ou cyclique et ramifié, ayant de 3 à 30 atomes de carbone, tel que de 4 à 20 ou 5 à 16 atomes de carbones ; dans lequel R⁵ est choisi parmi le groupe constitué par un atome d'hydrogène, un atome d'azote substitué ou non substitué et un groupe organique linéaire, ramifié, cyclique ou cyclique et ramifié et ayant de 1 à 30 atomes de carbone, tel que de 2 à 28, 3 à 24, 4 à 20 ou 5 à 16 atomes de carbones ; et dans lequel n est un nombre (e.g. entier relatif) supérieur à 10.

Selon une ou plusieurs formes de réalisation,
E/ un premier monomère répond à la formule R⁵NH₂ et un deuxième monomère répond à la formule R⁶NH₂, dans lequel R⁵ et R⁶ sont différents et choisis parmi le groupe constitué par un atome d'hydrogène, un atome d'azote substitué ou non substitué et un groupe organique linéaire, ramifié, cyclique ou cyclique et ramifié et ayant de 1 à 30 atomes de carbone, tel que de 2 à 28, 3 à 24, 4 à 20 ou 5 à 16 atomes de carbones ; et/ou
F/ le polyaminoborane répond à la formule [R⁵NH-BR³R⁴]ₘ[R⁶NH-BR³R⁴]₍ₙ₋ₘ₎, dans lequel R³ et R⁴ sont identiques ou différents et choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbone, tel que de 2 à 28, 3 à 24, 4 à 20 ou 5 à 16 atomes de carbones ; ou R³ et R⁴ forment ensemble un groupe organique cyclique ou cyclique et ramifié, ayant de 3 à 30 atomes de carbone, tel que de 4 à 20 ou 5 à 16 atomes de carbones ; dans lequel R⁵ et R⁶ sont différents et choisis parmi le groupe constitué par un atome d'hydrogène, un atome d'azote substitué ou non substitué et un groupe organique linéaire, ramifié, cyclique ou cyclique et ramifié et ayant de 1 à 30 atomes de carbone, tel que de 2 à 28, 3 à 24, 4 à 20 ou 5 à 16 atomes de carbones ; dans lequel n est un nombre supérieur à 10 ; et dans lequel m est un nombre (e.g. entier relatif) supérieur ou égal à 10 et inférieur à n.

Selon un ou plusieurs modes de réalisation, le procédé comprend la réaction d'une pluralité de monomères, par exemple deux ou trois monomères différents ou plus, avec l'aminoborane.

Avantageusement, le groupe amino secondaire (NR¹R²) lié au bore forme un encombrement stérique important stabilisant l'aminoborane sous une forme monomérique ou dimérique. Ainsi, ledit groupe amino secondaire permet d'obtenir un équilibre suffisamment déplacé vers la forme monomérique de l'aminoborane pour permettre la réaction entre l'aminoborane et l'au moins un monomère. De plus, ledit monomère étant moins encombré stériquement que le groupe amino secondaire, la substitution du groupe amino secondaire par ledit monomère est favorisée pour ainsi produire le polyaminoborane. Les groupes R³ et R⁴ n'étant pas mis en jeu lors de la substitution du groupe amino secondaire par le monomère, des aminoboranes substitués en R³ et/ou R⁴ peuvent également être utilisés dans le procédé de la présente description.

Selon un ou plusieurs modes de réalisation, au moins un de R¹ et R² est un groupe organique ramifié, cyclique ou cyclique et ramifié, ayant de 3 à 24 atomes de carbone, tel que de 4 à 20 ou 5 à 16 atomes de carbones ; ou R¹ et R² forment ensemble un groupe organique cyclique ou cyclique et ramifié ayant de 3 à 24 atomes de carbone, tel que de 4 à 20 ou 5 à 16 atomes de carbones. Selon un ou plusieurs modes de réalisation, au moins un de R¹ et R² est un groupe organique ramifié ou cyclique et ramifié, ayant de 3 à 24 atomes de carbone, tel que de 4 à 20 ou 5 à 16 atomes de carbones ; ou R¹ et R² forment ensemble un groupe organique cyclique et ramifié ayant de 3 à 24 atomes de carbone, tel que de 4 à 20 ou 5 à 16 atomes de carbones. Selon un ou plusieurs modes de réalisation, au moins un de R¹ et R² est un groupe organique ramifié ayant de 3 à 24 atomes de carbone, tel que de 4 à 20 ou 5 à 16 atomes de carbones.

Selon un ou plusieurs modes de réalisation, au moins un de R¹ et R² est un groupe organique de 3 à 24 atomes de carbones. Selon un ou plusieurs modes de réalisation, au moins un de R¹ et R² est un groupe organique de 4 à 20 atomes de carbones. Selon un ou plusieurs modes de réalisation, au moins un de R¹ et R² est un groupe organique de 5 à 16 atomes de carbones. Selon un ou plusieurs modes de réalisation, R¹ et R² forment ensemble un groupe organique cyclique de 3 à 24 atomes de carbones. Selon un ou plusieurs modes de réalisation, R¹ et R² forment ensemble un groupe organique cyclique de 4 à 20 atomes de carbones. Selon un ou plusieurs modes de réalisation, R¹ et R² forment ensemble un groupe organique cyclique de 5 à 16 atomes de carbones.

Selon un ou plusieurs modes de réalisation, au moins un de R¹ et R² est choisi parmi le groupe constitué par un alkyle substitué ou non substitué, un alcényle substitué ou non substitué, un alcynyle substitué ou non substitué, un aryle substitué ou non substitué et un hétéroaryle substitué ou non substitué. Selon un ou plusieurs modes de réalisation, au moins un de R¹ et R² est choisi parmi le groupe constitué par un alkylalcényle substitué ou non substitué, un alcénylalkyle substitué ou non substitué, un alkylalcynyle substitué ou non substitué, un alcynylalkyle substitué ou non substitué, un alkylaryle substitué ou non substitué, un arylalkyle substitué ou non substitué, un alkylhétéroaryle substitué ou non substitué, un hétéroarylalkyle substitué ou non substitué, un arylalcényle substitué ou non substitué, un hétéroarylalcényle substitué ou non substitué, un alcénylaryle substitué ou non substitué, un alcénylhétéroaryle substitué ou non substitué, un arylalcynyle substitué ou non substitué, un hétéroarylalcynyle substitué ou non substitué, un alcynylaryle substitué ou non substitué et un alcynylhétéroaryle substitué ou non substitué, R¹ et/ou R² comprenant de 2 à 30 atomes de carbone, tel que de 3 à 24, 4 à 20 ou 5 à 16 atomes de carbone.

Selon un ou plusieurs modes de réalisation, au moins un de R¹ et R² est choisi parmi le groupe constitué par un alkyle substitué ou non substitué et un alkylaryle substitué ou non substitué, R¹ et/ou R² comprenant de 2 à 30 atomes de carbone, tel que de 3 à 24, 4 à 20 ou 5 à 16 atomes de carbone. Selon un ou plusieurs modes de réalisation, au moins un de R¹ et R² est un alkyle substitué ou non substitué ayant de 2 à 30 atomes de carbone, tel que de 3 à 24, 4 à 20 ou 5 à 16 atomes de carbone. Selon un ou plusieurs modes de réalisation, au moins un de R¹ et R² est choisi parmi le groupe constitué par un propyle ramifié et substitué ou non substitué, un butyle ramifié et substitué ou non substitué, un pentyle ramifié et substitué ou non substitué, un cyclopentyle substitué ou non substitué, un cyclohexyle substitué ou non substitué, un pyrrole substitué ou non substitué et un α-methylbenzyle substitué ou non substitué ; ou R₁ et R₂ forment ensemble un groupe cyclique et ramifié, ayant de 5 à 16 atomes de carbones, tel qu'une pyrrolidine ou un piperidine ramifiée. Selon un ou plusieurs modes de réalisation, au moins un de R¹ et R² est un groupe chiral.

Selon un ou plusieurs modes de réalisation, le groupe amino secondaire répond à une des formules suivantes : 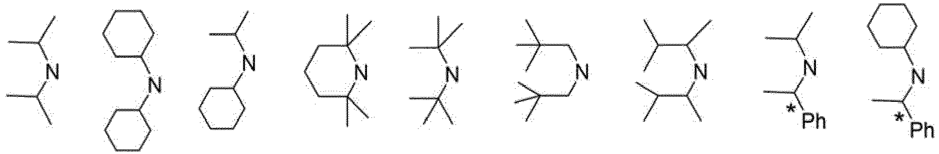 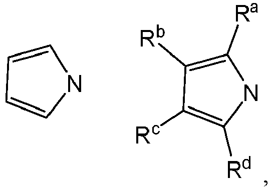 dans lequel R^{a}-R^{d} sont indépendamment choisis parmi le groupe constitué par un atome d'hydrogène et des substituants hydrocarbonés.

Selon un ou plusieurs modes de réalisation, l'aminoborane est à l'état liquide à -40°C et 100kPa. Avantageusement, le monomère peut être condensé dans l'aminoborane, par exemple à basse température.

Selon un ou plusieurs modes de réalisation, l'aminoborane est un diisopropylaminoborane.

Selon le premier aspect, R³ et R⁴ sont identiques ou différents et choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbone, tel que de 2 à 28, 3 à 24, 4 à 20 ou 5 à 16 atomes de carbones ; ou R³ et R⁴ forment ensemble un groupe organique cyclique ou cyclique et ramifié, ayant de 3 à 30 atomes de carbone, tel que de 4 à 20 ou 5 à 16 atomes de carbones.

Selon un ou plusieurs modes de réalisation, au moins un de R³ et R⁴ est un groupe organique de 2 à 28 atomes de carbones. Selon un ou plusieurs modes de réalisation, au moins un de R³ et R⁴ est un groupe organique de 3 à 24 atomes de carbones. Selon un ou plusieurs modes de réalisation, au moins un de R³ et R⁴ est un groupe organique de 4 à 20 atomes de carbones. Selon un ou plusieurs modes de réalisation, au moins un de R³ et R⁴ est un groupe organique de 5 à 16 atomes de carbones. Selon un ou plusieurs modes de réalisation, R³ et R⁴ forment ensemble un groupe organique de 4 à 20 atomes de carbones. Selon un ou plusieurs modes de réalisation, R³ et R⁴ forment ensemble un groupe organique de 5 à 16 atomes de carbones.

Selon un ou plusieurs modes de réalisation, au moins un de R³ et R⁴ est choisi parmi le groupe constitué par un atome d'hydrogène ; un hétéroatome substitué ou non substitué ; et un alkyle substitué ou non substitué, un alcényle substitué ou non substitué, un alcynyle substitué ou non substitué, un aryle substitué ou non substitué et un hétéroaryle substitué ou non substitué. Selon un ou plusieurs modes de réalisation, au moins un de R³ et R⁴ est choisi parmi le groupe constitué par un atome d'hydrogène, un hétéroatome substitué ou non substitué, un alkylalcényle substitué ou non substitué, un alcénylalkyle substitué ou non substitué, un alkylalcynyle substitué ou non substitué, un alcynylalkyle substitué ou non substitué, un alkylaryle substitué ou non substitué, un arylalkyle substitué ou non substitué, un alkylhétéroaryle substitué ou non substitué, un hétéroarylalkyle substitué ou non substitué, un arylalcényle substitué ou non substitué, un hétéroarylalcényle substitué ou non substitué, un alcénylaryle substitué ou non substitué, un alcénylhétéroaryle substitué ou non substitué, un arylalcynyle substitué ou non substitué, un hétéroarylalcynyle substitué ou non substitué, un alcynylaryle substitué ou non substitué, un alcynylhétéroaryle substitué ou non substitué, R³ et/ou R⁴ comprenant de 1 à 30 atomes de carbone, tel que de 2 à 28, 3 à 24, 4 à 20 ou 5 à 16 atomes de carbones.

Selon un ou plusieurs modes de réalisation, au moins un de R³ et R⁴ est un atome d'hydrogène. Selon un ou plusieurs modes de réalisation, R³ et R⁴ sont des atomes d'hydrogène. Selon un ou plusieurs modes de réalisation, au moins un de R³ et R⁴ est un alkyle substitué ou non substitué ayant de 1 à 30 atomes de carbone, tel que de 2 à 28, 3 à 24, 4 à 20 ou 5 à 16 atomes de carbones. Selon un ou plusieurs modes de réalisation, R³ et R⁴ sont des alkyles substitués ou non substitués ayant de 1 à 30 atomes de carbone, tel que de 2 à 28, 3 à 24, 4 à 20 ou 5 à 16 atomes de carbones.

Selon un ou plusieurs modes de réalisation, R⁵ et R⁶ sont différents et choisis parmi le groupe constitué par un atome d'hydrogène, un atome d'azote substitué ou non substitué et un groupe organique linéaire, ramifié, cyclique ou cyclique et ramifié et ayant de 1 à 30 atomes de carbone, tel que de 2 à 28, 3 à 24, 4 à 20 ou 5 à 16 atomes de carbones.

Selon un ou plusieurs modes de réalisation, au moins un de R⁵ et R⁶ est choisi parmi le groupe constitué par un groupe organique ayant de 2 à 28 atomes de carbones. Selon un ou plusieurs modes de réalisation, au moins un de R⁵ et R⁶ est choisi parmi le groupe constitué par un groupe organique ayant de 3 à 24 atomes de carbones. Selon un ou plusieurs modes de réalisation, au moins un de R⁵ et R⁶ est choisi parmi le groupe constitué par un groupe organique ayant de 4 à 20. Selon un ou plusieurs modes de réalisation, au moins un de R⁵ et R⁶ est choisi parmi le groupe constitué par un groupe organique ayant de 5 à 16 atomes de carbones.

Selon un ou plusieurs modes de réalisation, au moins un de R⁵ et R⁶ est choisi parmi le groupe constitué par un atome d'hydrogène ; un atome d'azote substitué ou non substitué ; et un alkyle substitué ou non substitué, un alcényle substitué ou non substitué, un alcynyle substitué ou non substitué, un aryle substitué ou non substitué et un hétéroaryle substitué ou non substitué. Selon un ou plusieurs modes de réalisation, au moins un de R⁵ et R⁶ est choisi parmi le groupe constitué par un atome d'hydrogène, un atome d'azote substitué ou non substitué, un alkylalcényle substitué ou non substitué, un alcénylalkyle substitué ou non substitué, un alkylalcynyle substitué ou non substitué, un alcynylalkyle substitué ou non substitué, un alkylaryle substitué ou non substitué, un arylalkyle substitué ou non substitué, un alkylhétéroaryle substitué ou non substitué, un hétéroarylalkyle substitué ou non substitué, un arylalcényle substitué ou non substitué, un hétéroarylalcényle substitué ou non substitué, un alcénylaryle substitué ou non substitué, un alcénylhétéroaryle substitué ou non substitué, un arylalcynyle substitué ou non substitué, un hétéroarylalcynyle substitué ou non substitué, un alcynylaryle substitué ou non substitué et un alcynylhétéroaryle substitué ou non substitué, R⁵ et/ou R⁶ comprenant de 1 à 30 atomes de carbone, tel que de 2 à 28, 3 à 24, 4 à 20 ou 5 à 16 atomes de carbones.

Selon un ou plusieurs modes de réalisation, au moins un de R⁵ et R⁶ est choisi parmi le groupe constitué par un atome d'hydrogène ; un atome d'azote substitué ou non substitué ; et un alkyle substitué ou non substitué, un alkylalcényle substitué ou non substitué, un alkylalcynyle substitué ou non substitué, un alkylaryle substitué ou non substitué et un alkylhétéroaryle substitué ou non substitué, R⁵ et/ou R⁶ comprenant de 1 à 30 atomes de carbone, tel que de 2 à 28, 3 à 24, 4 à 20 ou 5 à 16 atomes de carbones.

Selon un ou plusieurs modes de réalisation, au moins un de R⁵ et R⁶ est choisi parmi le groupe constitué par un atome d'hydrogène ; un atome d'azote substitué ou non substitué ; un méthyle ; un éthyle ; un n-propyle ; un n-butyle ; un allyle substitué ou non substitué ; un propargyle substitué ou non substitué ; et un groupe organique linéaire, ramifié, cyclique ou cyclique et ramifié, ayant de 3 à 24 atomes de carbone, tel que de 4 à 20 ou 5 à 16 atomes de carbones et substitué d'au moins une instauration de type alcène et/ou alcyne, et/ou substitué d'au moins une fonction éther et/ou thioéther, et/ou substitué d'au moins une fonction amine secondaire, phosphine et/ou silyle. Selon un ou plusieurs modes de réalisation, ledit atome d'azote est substitué d'un seul substituant (autre qu'un atome d'hydrogène).

Selon un ou plusieurs modes de réalisation, au moins un de R⁵ et R⁶ est un groupe alkyle ayant de 1 à 30 atomes de carbone, tel que de 2 à 28, 3 à 24, 4 à 20 ou 5 à 16 atomes de carbones substitué d'un ou plusieurs groupes fonctionnels choisis parmi la liste constitué par un éther, un thioéther, une amine secondaire, une phosphine, un silyle, un alcène et un alcyne.

Selon un ou plusieurs modes de réalisation, au moins un de R¹ à R⁶ et R^{a} à R^{d} est un groupe alkyle ayant de 1 à 30 atomes de carbone, tel que de 2 à 28, 3 à 24, 4 à 20 ou 5 à 16 atomes de carbones substitué d'un ou plusieurs groupes fonctionnels choisis parmi la liste constitué par un alkyle, un alcène, un alcyne, un aryle, un hétéroaryle, un alcool, une cétone, un benzoyle, un aldéhyde, un carbonate, un acide carboxylique, un carboxylate, un ester, un éther-oxyde, un hétérocycle, une amine, une amide, un azo, un diazo, un diazoamino, un azoture, une imine secondaire, une hydrazine, une hydrazone, une amidine, un carbamate, une guanidine, une carbodiimide, un nitrile, un isonitrile, un imide, un azide, un diimide, un thiol, un thioether, une thiocétone, un cyanate, un nitrate, un nitrite, un nitro, un nitroso, une oxime, un pyridyl, un thioether, un disulfide, un sulfinyl, un sulfonyl, un thiocyanate, un isothiocyanate, une thione, un phosphorane, une phosphine, un boronate, un borinate, un silane et un halogène, les groupes fonctionnels comprenant de 0 à 20 atomes de carbones, par exemple comprenant de 1 à 15 atomes de carbone.

Selon un ou plusieurs modes de réalisation, au moins un de R¹ à R⁶ et R^{a} à R^{d} comprend en outre un ou plusieurs hétéroatomes. Selon un ou plusieurs modes de réalisation, au moins un de R¹ à R⁶ comprend en outre un ou plusieurs hétéroatomes choisis parmi le groupe constitué par N, O, S, P, Si, Sn, Ge, As, F, Cl, Br et I.

Selon un ou plusieurs modes de réalisation, le polyaminoborane est sous forme polymérique ou co-polymérique et n est supérieur à environ 100. Selon un ou plusieurs modes de réalisation, n est supérieur à environ 250. Selon un ou plusieurs modes de réalisation, n est supérieur à environ 500. Selon un ou plusieurs modes de réalisation, n est supérieur à environ 1000. Selon un ou plusieurs modes de réalisation, n est supérieur à environ 2500. Selon un ou plusieurs modes de réalisation, n est supérieur à environ 5000. Selon un ou plusieurs modes de réalisation, n est supérieur à environ 10000. Selon un ou plusieurs modes de réalisation, n est supérieur à environ 25000.

Selon un ou plusieurs modes de réalisation, le polyaminoborane est sous forme oligomérique ou co-oligomérique et n est compris entre un nombre supérieur à 10 et environ 100. Selon un ou plusieurs modes de réalisation, n est compris entre un nombre supérieur à 10 et environ 75. Selon un ou plusieurs modes de réalisation, n est compris entre un nombre supérieur à 10 et environ 50. Selon un ou plusieurs modes de réalisation, n est compris entre un nombre supérieur à 10 et environ 40.

Selon un ou plusieurs modes de réalisation, m est compris entre environ 0,01 ×n et environ 0,99×n. Selon un ou plusieurs modes de réalisation, m est compris entre environ 0,1 ×n et environ 0,9×n. Selon un ou plusieurs modes de réalisation, m est compris entre environ 0,2×n et environ 0,8×n. Selon un ou plusieurs modes de réalisation, m est compris entre environ 0,3×n et environ 0,7×n. Selon un ou plusieurs modes de réalisation, m est compris entre environ 0,4×n et environ 0,6×n.

Selon un ou plusieurs modes de réalisation, le procédé comprend en outre : la fourniture de l'un de l'aminoborane et de l'au moins un monomère ; l'ajout de l'autre de l'aminoborane et de l'au moins un monomère ; et le mélange de l'aminoborane avec l'au moins un monomère dans des conditions réactionnelles suffisantes pour former le polyaminoborane.

Selon un ou plusieurs modes de réalisation, l'au moins un monomère est à l'état gazeux à 0°C et 100kPa, le procédé comprenant en outre la fourniture de l'aminoborane et l'ajout de l'au moins un monomère sur l'aminoborane.

Selon un ou plusieurs modes de réalisation, la réaction est effectuée avec ou sans catalyseur. Selon un ou plusieurs modes de réalisation, la réaction est effectuée avec ou sans un solvant réactionnel. Selon un ou plusieurs modes de réalisation, la source du bore compris dans polyaminoborane consiste substantiellement en le bore compris dans l'aminoborane. Avantageusement, il n'est pas nécessaire fournir et ajouter une source de bore autre que l'aminoborane. Par exemple, il n'est pas nécessaire préparer et ajouter un borane supplémentaire dans le mélange réactionnel pour former un adduit de type ammoniac-borane, amine-borane ou hydrazine-borane pour produire le polyaminoborane.

Selon un ou plusieurs modes de réalisation, le procédé comprend en outre : le réchauffement du mélange réactionnel pour atteindre une température comprise entre 15 et 30°C.

Selon un ou plusieurs modes de réalisation, le procédé comprend en outre : l'ajout d'un solvant de filtration après l'étape de mélange ; et la filtration du polyaminoborane. Selon un ou plusieurs modes de réalisation, le procédé comprend en outre : le lavage au moyen d'un solvant de lavage du polyaminoborane filtré ; et le séchage du polyaminoborane lavé. Selon un ou plusieurs modes de réalisation, le séchage est effectué sous vide. Selon un ou plusieurs modes de réalisation, le procédé comprend en outre : l'isolation du polyaminoborane. Selon un ou plusieurs modes de réalisation, l'isolation du polyaminoborane est effectuée par dialyse.

Selon un ou plusieurs modes de réalisation, le solvant réactionnel, le solvant de filtration et/ou le solvant de lavage sont identiques ou différents et choisis dans le groupe constitué par l'éther éthylique, l'acétonitrile, un alcane linéaire, ramifié, cyclique ou cyclique et ramifié ayant de 5 à 8 atomes de carbones tel que le pentane, l'hexane, le cyclohexane, l'heptane, le tert-butyl méthyl éther, tert-amyl méthyl éther, le benzène, le toluène, le tétrahydrofurane, le dichlorométhane et le chloroforme. Selon un ou plusieurs modes de réalisation, le solvant réactionnel, le solvant de filtration et/ou le solvant de lavage sont des solvants anhydres.

Selon un ou plusieurs modes de réalisation, l'ajout et/ou le mélange est effectué à une température prédéfinie. Selon un ou plusieurs modes de réalisation, l'ajout et/ou le mélange est effectué à une température inférieure ou égale à environ 30°C. Selon un ou plusieurs modes de réalisation, l'ajout et/ou le mélange est effectué à une température inférieure ou égale à environ 0°C. Selon un ou plusieurs modes de réalisation, l'ajout et/ou le mélange est effectué à une température inférieure ou égale à environ -15°C. Selon un ou plusieurs modes de réalisation, l'ajout et/ou le mélange est effectué à une température inférieure ou égale à environ -30°C. Selon un ou plusieurs modes de réalisation, l'ajout et/ou le mélange est effectué à une température comprise entre environ -35°C et environ - 100°C. Avantageusement, des polyaminoboranes à chaine plus longue peuvent être obtenus lorsque l'ajout et/ou le mélange est effectuée à basse température, telle qu'entre environ -40°C et environ -60°C. Avantageusement, des polyaminoboranes peuvent également être obtenus lorsque l'ajout et/ou le mélange est effectué à température ambiante. Il est entendu ici qu'il n'est pas essentiel d'effectuer la réaction de polymérisation à une température particulière pour obtenir un polyaminoborane.

Selon un ou plusieurs modes de réalisation, l'ajout est effectué sur une durée prédéfinie. Avantageusement, des polyaminoboranes à chaine plus longue peuvent être obtenus lorsque l'ajout est effectué sur une durée prédéfinie, tel que par exemple au goutte à goutte. Selon un ou plusieurs modes de réalisation, la durée d'ajout est supérieure ou égale à environ 1 seconde. Selon un ou plusieurs modes de réalisation, la durée d'ajout est comprise entre environ 10 secondes et environ 15 minutes. Selon un ou plusieurs modes de réalisation, la durée d'ajout est comprise entre environ 20 secondes et environ 10 minutes. Selon un ou plusieurs modes de réalisation, la durée d'ajout est comprise entre environ 30 secondes et environ 5 minutes. Il est entendu ici qu'un polyaminoborane peut être obtenu au moyen de durées d'ajout plus courtes ou plus longues que celles définies ci-dessus. Par exemple, un polyaminoborane peut également être obtenu lorsque l'ajout est effectué en une seule portion du second réactif.

Selon un ou plusieurs modes de réalisation, le mélange est effectué pendant une durée comprise entre environ 1 minute et environ 12 heures. Selon un ou plusieurs modes de réalisation, le mélange est effectué pendant une durée de mélange comprise entre environ 15 minutes et environ 6 heures. Selon un ou plusieurs modes de réalisation, le mélange est effectué pendant une durée de mélange comprise entre environ 30 minutes et environ 6 heures. Selon un ou plusieurs modes de réalisation, le mélange est effectué pendant une durée de mélange comprise entre environ 1 heure et environ 3 heures. Il est entendu ici qu'un polyaminoborane peut être obtenu au moyen de durées de mélange plus courtes ou plus longues que celles définies ci-dessus.

Selon un ou plusieurs modes de réalisation, la température de réaction, *i.e.,* de mélange, peut être modifiée, par exemple d'une première température de mélange vers une deuxième température de mélange. Selon un ou plusieurs modes de réalisation, la première température de mélange est plus basse que la deuxième température de mélange. Selon un ou plusieurs modes de réalisation, la première température de mélange est une température de mélange comme définie ci-dessus et la deuxième température de mélange est comprise entre environ 15 et environ 30°C.

Selon un ou plusieurs modes de réalisation, l'ajout et/ou le mélange sont effectués à une pression prédéfinie. Selon un ou plusieurs modes de réalisation, l'ajout et/ou le mélange est effectué à haute pression, telle que jusqu'à environ 10MPa, ou sous vide, tel que jusqu'à environ 10⁻⁶Pa. Selon un ou plusieurs modes de réalisation, l'ajout et/ou le mélange est effectué à une pression comprise entre environ IMPa et environ 10⁻⁵Pa. Selon un ou plusieurs modes de réalisation, l'ajout et/ou le mélange est effectué à environ la pression atmosphérique. Il est entendu ici qu'un polyaminoborane peut être obtenu au moyen de pressions d'ajout et/ou de mélange autres que celles définies ci-dessus.

Selon un ou plusieurs modes de réalisation, la réaction est effectuée sous atmosphère oxydante, réductrice ou inerte. Selon un ou plusieurs modes de réalisation, la réaction est effectuée sous atmosphère inerte. Selon un ou plusieurs modes de réalisation, la réaction est effectuée sous argon ou azote. Avantageusement, des polyaminoboranes comprenant des chaines particulièrement longues peuvent être obtenus lorsque la réaction est effectuée sous atmosphère inerte, tel que sous argon ou sous azote. Il est entendu ici qu'un polyaminoborane peut également être obtenu sous air.

Selon un ou plusieurs modes de réalisation, le rapport molaire de l'aminoborane sur la somme des monomères est compris entre environ 0,5 et environ 2. Avantageusement, il n'est pas nécessaire d'effectuer la réaction au moyen d'une quantité de monomères en excès par rapport à l'aminoborane. Selon un ou plusieurs modes de réalisation, le rapport molaire de l'aminoborane sur la somme des monomères est compris entre environ 0,9 et environ 1,5. Selon un ou plusieurs modes de réalisation, le rapport molaire de l'aminoborane sur la somme des monomères est compris entre environ 0,99 et environ 1,25. Selon un ou plusieurs modes de réalisation, le rapport molaire de l'aminoborane sur la somme des monomères est à peu près stœchiométrique. Selon un ou plusieurs modes de réalisation, l'au moins un monomère est en excès par rapport à la quantité de l'aminoborane. Avantageusement, il n'est pas nécessaire d'effectuer la réaction au moyen d'un rapport molaire stœchiométrique de l'aminoborane sur la somme des monomères.

Selon un ou plusieurs modes de réalisation, le rapport molaire du premier monomère sur le deuxième monomère est compris entre environ 0,01 et environ 99. Avantageusement, il n'est pas nécessaire d'effectuer la réaction au moyen d'un rapport molaire stœchiométrique du premier monomère sur le deuxième monomère. Selon un ou plusieurs modes de réalisation, le rapport molaire du premier monomère sur le deuxième monomère est compris entre environ 0,1 et environ 90. Selon un ou plusieurs modes de réalisation, le rapport molaire du premier monomère sur le deuxième monomère est compris entre environ 0,25 et environ 4. Selon un ou plusieurs modes de réalisation, lequel le rapport molaire du premier monomère sur le deuxième monomère est compris entre environ 0,5 et environ 2. Selon un ou plusieurs modes de réalisation, lequel le rapport molaire du premier monomère sur le deuxième monomère est compris entre environ 0,66 et environ 1,5.

La présente description concerne également un polyaminoborane, par exemple tel que préparé par le procédé selon le premier aspect. Plus précisément, selon le deuxième aspect, le polyaminoborane comprend au moins un motif de répétition répondant à la formule R⁵NH-BR³R⁴, dans lequel R³ et R⁴ sont identiques ou différents et sont choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbones, tel que de 2 à 28, 3 à 24, 4 à 20 ou 5 à 16 atomes de carbones ; ou R³ et R⁴ forment ensemble un groupe organique cyclique ou cyclique et ramifié, ayant de 3 à 30 atomes de carbones, tel que de 4 à 20 ou 5 à 16 atomes de carbones ; dans lequel R⁵ est choisi parmi le groupe constitué par un atome d'hydrogène, un atome d'azote substitué ou non substitué et un groupe organique linéaire, ramifié, cyclique ou cyclique et ramifié et ayant de 1 à 30 atomes de carbone, tel que de 2 à 28, 3 à 24, 4 à 20 ou 5 à 16 atomes de carbones ; dans lequel si R⁵ est un atome hydrogène ou un méthyle, au moins un de R³ et R⁴ n'est pas un atome d'hydrogène ; et dans lequel si R⁵ est un groupe n-butyle, au moins un de R³ et R⁴ n'est pas un atome d'hydrogène ou le polyaminoborane a une masse molaire moyenne en masse supérieure ou égale à environ 500000, préférablement supérieure ou égale à environ 1000000, plus préférablement supérieure ou égale à environ 2000000.

Selon un ou plusieurs modes de réalisation le polyaminoborane comprend au moins 10 motifs de répétition (forme polymérique ou oligomériques). Selon un ou plusieurs modes de réalisation le polyaminoborane comprend plus de 100 motifs de répétition (forme polymérique). Selon un ou plusieurs modes de réalisation le polyaminoborane comprend entre 10 et 100 motifs de répétition (forme oligomériques).

Selon un ou plusieurs modes de réalisation, R³ et R⁴ sont définis comme indiqué ci-dessus dans les modes de réalisation selon le premier aspect.

Selon un ou plusieurs modes de réalisation, R⁵ est défini comme indiqué ci-dessus dans les modes de réalisation selon le premier aspect, par exemple avec les conditions que si R⁵ est un atome hydrogène ou un méthyle, au moins un de R³ et R⁴ n'est pas un atome d'hydrogène ; et si R⁵ est un groupe n-butyle, au moins un de R³ et R⁴ n'est pas un atome d'hydrogène ou le polyaminoborane a une masse molaire moyenne en masse supérieure ou égale à environ 500000, 1000000 ou 2000000.

Selon un ou plusieurs modes de réalisation, R⁵ est choisi parmi le groupe constitué par un atome d'azote substitué ou non substitué et un groupe organique linéaire, ramifié, cyclique ou cyclique et ramifié, ayant de 2 à 30 atomes de carbone, tel que de 3 à 24, 4 à 20 ou 5 à 16 atomes de carbones.

Selon un ou plusieurs modes de réalisation, R⁵ est choisi parmi le groupe constitué par un atome d'azote substitué ou non substitué ; et un alkyle substitué ou non substitué, un alcényle substitué ou non substitué, un alcynyle substitué ou non substitué, un aryle substitué ou non substitué et un hétéroaryle substitué ou non substitué. Selon un ou plusieurs modes de réalisation, R⁵ est choisi parmi le groupe constitué par un atome d'azote substitué ou non substitué, un alkylalcényle substitué ou non substitué, un alcénylalkyle substitué ou non substitué, un alkylalcynyle substitué ou non substitué, un alcynylalkyle substitué ou non substitué, un alkylaryle substitué ou non substitué, un arylalkyle substitué ou non substitué, un alkylhétéroaryle substitué ou non substitué, un hétéroarylalkyle substitué ou non substitué, un arylalcényle substitué ou non substitué, un hétéroarylalcényle substitué ou non substitué, un alcénylaryle substitué ou non substitué, un alcénylhétéroaryle substitué ou non substitué, un arylalcynyle substitué ou non substitué, un hétéroarylalcynyle substitué ou non substitué, un alcynylaryle substitué ou non substitué et un alcynylhétéroaryle substitué ou non substitué, R⁵ comprenant de 2 à 30 atomes de carbone, tel que de 3 à 24, 4 à 20 ou 5 à 16 atomes de carbones.

Selon un ou plusieurs modes de réalisation, R⁵ est choisi parmi le groupe constitué par un atome d'azote substitué ou non substitué ; et un alkyle substitué ou non substitué, un alkylalcényle substitué ou non substitué, un alkylalcynyle substitué ou non substitué, un alkylaryle substitué ou non substitué et un alkylhétéroaryle substitué ou non substitué, R⁵ comprenant de 2 à 30 atomes de carbone, tel que de 3 à 24, 4 à 20 ou 5 à 16 atomes de carbone.

Selon un ou plusieurs modes de réalisation, R⁵ est choisi parmi le groupe constitué par un atome d'azote substitué ou non substitué et un alkyle substitué ou non substitué ayant de 2 à 30 atomes de carbone, tel que de 3 à 24, 4 à 20 ou 5 à 16 atomes de carbone. Selon un ou plusieurs modes de réalisation, R⁵ est un atome d'azote ou un groupe alkyle ayant de 2 à 30 atomes de carbone, tel que de 3 à 24, 4 à 20 ou 5 à 16 atomes de carbone, substitué d'un ou plusieurs groupes fonctionnels choisis parmi la liste constituée par un alcène, un alcyne, un éther, un thioether, une amine secondaire, une phosphine et un silyle. Selon un ou plusieurs modes de réalisation, R⁵ est choisi parmi le groupe constitué par un atome d'azote substitué ou non substitué ; un éthyle ; un n-propyle ; un n-butyle ; un allyle substitué ou non substitué ; un propargyle substitué ou non substitué ; et un groupe organique linéaire, ramifié, cyclique ou cyclique et ramifié, ayant de 3 à 24 atomes de carbone, tel que de 4 à 20 ou 5 à 16 atomes de carbones, et comprenant optionnellement au moins une instauration, telle qu'un groupe alcène et/ou alcyne, et/ou au moins une fonction éther et/ou thioéther, et/ou une fonction amine secondaire, phosphine et/ou silyle. Selon un ou plusieurs modes de réalisation, R⁵ est un groupe alkyle ayant de 3 à 24 atomes de carbone, tel que de 4 à 20 ou 5 à 16 atomes de carbones, substitué d'un ou plusieurs groupes fonctionnels choisis parmi la liste constitué par un éther, un thioéther, une amine secondaire, une phosphine, un silyle, un alcène et un alcyne.

Selon un ou plusieurs modes de réalisation, R⁵ est un groupe alkyle substitué d'un ou plusieurs groupes fonctionnels choisis parmi la liste constitué par un alkyle, un alcène, un alcyne, un aryle, un hétéroaryle, un alcool, une cétone, un benzoyle, un aldéhyde, un carbonate, un acide carboxylique, un carboxylate, un ester, un éther-oxyde, un hétérocycle, une amine, une amide, un azo, un diazo, un diazoamino, un azoture, une imine secondaire, une hydrazine, une hydrazone, une amidine, un carbamate, une guanidine, une carbodiimide, un nitrile, un isonitrile, un imide, un azide, un diimide, un thiol, un thioether, une thiocétone, un cyanate, un nitrate, un nitrite, un nitro, un nitroso, une oxime, un pyridyl, un thioether, un disulfide, un sulfinyl, un sulfonyl, un thiocyanate, un isothiocyanate, une thione, un phosphorane, une phosphine, un boronate, un borinate, un silane et un halogène, les groupes fonctionnels comprenant de 0 à 20 atomes de carbones, par exemple comprenant de 1 à 15 atomes de carbone.

Selon un ou plusieurs modes de réalisation, R⁵ comprend en outre un ou plusieurs hétéroatomes. Selon un ou plusieurs modes de réalisation, R⁵ comprend un hétéroatome choisi parmi le groupe constitué par N, O, S, P, Si, Sn, Ge, As, F, Cl, Br et I.

Selon un ou plusieurs modes de réalisation, le polyaminoborane répond à la formule suivante : [R⁵NH-BR³R⁴]ₙ, dans lequel n est défini comme indiqué ci-dessus dans les modes de réalisation selon le premier aspect ; et dans lequel si R⁵ est un atome hydrogène ou un méthyle, au moins un de R³ et R⁴ n'est pas un atome d'hydrogène ; et dans lequel si R⁵ est un groupe n-butyle, au moins un de R³ et R⁴ n'est pas un atome d'hydrogène ou le polyaminoborane a une masse molaire moyenne en masse supérieure ou égale à environ 500000.

Selon un ou plusieurs modes de réalisation, le polyaminoborane répond à la formule suivante : [R⁵NH-BR³R⁴]ₘ[R⁶NH-BR³R⁴]₍ₙ₋ₘ₎, dans lequel n et m sont définis comme indiqué ci-dessus dans les modes de réalisation selon le premier aspect ; dans lequel R⁶ est diffèrent de R⁵ et R⁶ est choisi parmi le groupe constitué par un atome d'hydrogène, un atome d'azote substitué ou non substitué et un groupe organique linéaire, ramifié, cyclique ou cyclique et ramifié, ayant de 1 à 30 atomes de carbones, tel que de 2 à 28, 3 à 24, 4 à 20 ou 5 à 16 atomes de carbones ; et dans lequel si R⁵ est un méthyle, au moins un de R³ et R⁴ n'est pas un atome d'hydrogène, ou R⁶ n'est pas un atome d'hydrogène ou un n-butyle. Selon un ou plusieurs modes de réalisation, si R⁵ est un n-butyle, au moins un de R³ et R⁴ n'est pas un atome d'hydrogène, ou R⁶ n'est pas un atome d'hydrogène ou un méthyle. Selon un ou plusieurs modes de réalisation, si R⁵ est un atome d'hydrogène, au moins un de R³ et R⁴ n'est pas un atome d'hydrogène, ou R⁶ n'est pas un méthyle ou un n-butyle. Selon un ou plusieurs modes de réalisation, R⁶ est défini comme indiqué ci-dessus dans les modes de réalisation selon le premier aspect, par exemple avec la condition que si R⁵ est un méthyle, au moins un de R³ et R⁴ n'est pas un atome d'hydrogène, ou R⁶ n'est pas un atome d'hydrogène ou un n-butyle.

Selon un ou plusieurs modes de réalisation, le rapport molaire d'un premier motif de répétition sur un deuxième motif de répétition du polyaminoborane est défini comme indiqué ci-dessus dans les modes de réalisation selon le premier aspect.

Selon un ou plusieurs modes de réalisation, le polyaminoborane est un polymère ou un copolymère et a une masse molaire moyenne en masse (Mw) supérieure ou égale à environ 50000. Selon un ou plusieurs modes de réalisation, le polyaminoborane a une masse molaire moyenne en masse supérieure ou égale à environ 100000. Selon un ou plusieurs modes de réalisation, le polyaminoborane a une masse molaire moyenne en masse supérieure ou égale à environ 200000. Selon un ou plusieurs modes de réalisation, le polyaminoborane a une masse molaire moyenne en masse supérieure ou égale à environ 300000. Selon un ou plusieurs modes de réalisation, lequel le polyaminoborane a une masse molaire moyenne en masse supérieure ou égale à environ 400000. Selon un ou plusieurs modes de réalisation, le polyaminoborane a une masse molaire moyenne en masse supérieure ou égale à environ 500000. Selon un ou plusieurs modes de réalisation, lequel le polyaminoborane a une masse molaire moyenne en masse supérieure ou égale à environ 900000. Selon un ou plusieurs modes de réalisation, le polyaminoborane a une masse molaire moyenne en masse supérieure ou égale à environ 2000000.

Selon un ou plusieurs modes de réalisation, le polyaminoborane est un oligomère ou un co-oligomère et a une masse molaire moyenne en masse comprise entre environ 600 et environ 4000. Selon un ou plusieurs modes de réalisation, le polyaminoborane a une masse molaire moyenne en masse comprise entre environ 800 et environ 3000. Selon un ou plusieurs modes de réalisation, le polyaminoborane a une masse molaire moyenne en masse comprise entre environ 1000 et environ 2000.

Selon un ou plusieurs modes de réalisation, le polyaminoborane est un polymère ou un copolymère ayant une polydispersité (PD ; PDI ; Mw/Mn) comprise entre environ 2 et environ 8, tel que entre environ 2 et environ 6. Selon un ou plusieurs modes de réalisation, le polyaminoborane est un oligomère ou un co-oligomère ayant une polydispersité comprise entre environ 1 et environ 1,5.

La présente description concerne également des utilisations du polyaminoborane selon le deuxième aspect et/ou d'un polyaminoborane préparé par le procédé selon le premier aspect. Plus précisément, selon le troisième aspect, le polyaminoborane peut être utilisé pour la préparation d'un précurseur de céramique ou d'une céramique. En effet, les polyaminoboranes selon la présente description sont des précurseurs privilégiés de céramiques, telles que des céramiques à base de bore.

Selon un ou plusieurs modes de réalisation, le polyaminoborane est utilisé dans une étape de revêtement, de mise forme, d'imprégnation ou de céramisation.

Selon un ou plusieurs modes de réalisation, le précurseur de céramique ou la céramique est un matériau de type « BNX », dans lequel X est un atome tel que C et Si. Avantageusement, des alternatives à l'utilisation de borazine pour la préparation de céramiques sont proposées au moyen de polyaminoboranes selon la présente description. En effet, il est connu une stratégie de synthèse faisant intervenir la polymérisation de borazine (B₃N₃H₃) en polyborazilène pouvant être mis en forme au moyen d'amines avant céramisation. Par contre, la borazine est difficile à manipuler et peu stable thermiquement.

Selon un quatrième aspect, le polyaminoborane selon le deuxième aspect et/ou un polyaminoborane préparé par le procédé selon le premier aspect peut être utilisé pour la production de nitrure de bore.

Selon un cinquième aspect, le polyaminoborane selon le deuxième aspect et/ou un polyaminoborane préparé par le procédé selon le premier aspect peut être utilisé pour le stockage et/ou la production de dihydrogène.

Selon un sixième aspect, la présente description concerne également un précurseur de céramique ou céramique comprenant un polyaminoborane selon le deuxième aspect et/ou un polyaminoborane préparé par le procédé selon le premier aspect.

Selon un ou plusieurs modes de réalisation, le précurseur de céramique et/ou la céramique est un matériau pour application dans l'aéronautique et/ou l'armement.

Selon un ou plusieurs modes de réalisation, la céramique est une céramique à base de nitrure de bore.

Selon un septième aspect, la présente description concerne également une pile à hydrogène ou un matériau énergétique comprenant un polyaminoborane selon le deuxième aspect et/ou un polyaminoborane préparé par le procédé selon le premier aspect.

Selon un ou plusieurs modes de réalisation, le polyaminoborane est un réservoir d'hydrogène pour le stockage chimique réversible de dihydrogène.

Avantageusement, le procédé de la présente description permet la fonctionnalisation de polyaminoboranes au moyen de groupes fonctionnels, tel que l'éthyle et notamment le propargyle, permettant la préparation de matériaux énergétiques, *i.e.*, matériaux ayant la propriété de libérer violemment de l'énergie par transformation chimique. Selon un ou plusieurs modes de réalisation, le polyaminoborane comprend un palier de perte de masse principal (e.g. palier de perte de masse supérieure à 50, 60 ou 70% de la masse totale du polyaminoborane) dont le point central et/ou d'inflexion de température est situé en dessous de 190°C tel que mesuré par thermogravimétrie (ATG), par exemple sous conditions de montée en température de 10°C/min sous N₂, par exemple utilisant un « Thermogravimetric Analyzer TGA/DSC 1 » de Mettler Toledo, par exemple sous pression atmosphérique. Selon un ou plusieurs modes de réalisation, le point central et/ou d'inflexion de température du palier principal est situé en dessous d'une température choisie parmi de groupe constitué par 180°C, 170°C, 160°C, 150°C, 140°C, 130°C, 120°C, 110°C et 100°C et/ou la perte de masse du palier principal est supérieure à 50, 60 ou 70% de la masse totale du polyaminoborane. Selon un ou plusieurs modes de réalisation, le point central et/ou d'inflexion de température du palier principal est situé en dessous de 105 ou 100°C et/ou la perte de masse du palier principal est supérieure à 65 ou 70% de la masse totale du polyaminoborane.

### EXEMPLES

Le procédé de préparation des polyaminoboranes peut être effectué selon deux protocoles généraux A) et B) dans lesquels un premier réactif est ajouté à un deuxième réactif. Le protocole A) comprend l'ajout d'une première quantité (Q1) de l'aminoborane, tel que du diisopropylaminoborane (DIAB) sur une deuxième quantité (Q2) d'ammoniac, d'amine primaire ou d'hydrazine substituée ou non substituée (A) ou d'un mélange d'ammoniac, d'amines primaires et/ou d'hydrazines substituées ou non substituées (A/A' ; A/A'/A" ; etc...). Le protocole B) comprend l'ajout de la deuxième quantité (Q2) d'ammoniac, d'amine primaire ou d'hydrazine substituée ou non substituée ou d'un mélange d'ammoniac, d'amines primaires et/ou d'hydrazines substituées ou non substituées sur la première quantité (Q1) de l'aminoborane. Dans ces exemples, le deuxième réactif est ajouté sur une durée prédéfinie, par exemple lentement, à l'aide d'une seringue.

Une fois l'addition des réactifs effectuée, la réaction est conservée à une température prédéfinie (T1), par exemple -40°C, pendant un temps prédéfinie (t1) pouvant varier de quelques minutes, e.g. 1 minute, à quelques heures, e.g. 1 heure. La température du milieu réactionnel est ensuite variée pour atteindre la température ambiante, par exemple 20°C, et le milieu réactionnel est optionnellement laissé sous agitation pendant une ou plusieurs heures (t2) à la température ambiante, par exemple entre 1 heure et 24 heures.

Bien que les conditions de réaction de ces exemples permettent l'obtention de polyaminoboranes à longue chaine avec de bons rendements, le procédé peut être effectué selon d'autres conditions d'ajout, de température, de temps et de ratios molaires.

Lorsque l'amine primaire et/ou l'hydrazine choisie est gazeuse à la température et pression ambiante, la réaction est préférablement réalisée en mettant en œuvre le protocole B) pour condenser l'amine primaire et/ou l'hydrazine sur l'aminoborane, par exemple préalablement refroidi à basse température, par exemple dans un réacteur, tel qu'un réacteur ou bouteille de type Fisher-Porter.

Selon un ou plusieurs modes de réalisation, la polymérisation est observée par une augmentation de la viscosité du milieu réactionnel et/ou l'apparition d'un solide (e.g. solide blanc).

L'isolement du polymère peut être effectué par filtration, par exemple par ajout préalable d'un volume (V1) de solvant (S) de filtration, préférablement anhydre. Par exemple, le solide peut être transféré sur un fritté, préférablement sous argon. Le solide obtenu peut être lavé avec un solvant de lavage, par exemple au moyen de un ou plusieurs volumes, tels que deux volumes (V1), du même solvant de filtration. Le solide peut être séché sous vide, par exemple sous vide poussé.

Un échantillon du polyaminoborane peut être contrôlé par RMN ¹¹B dans du CDCl₃, l'absence de tout signal autre que celui du polyaminoborane étant caractéristique d'un polymère exempt de sous-produit soluble. Si nécessaire, le polyaminoborane peut être relavé avec un volume supplémentaire de solvant de lavage, par exemple jusqu'au contrôle de l'absence de tout signal en RMN ¹¹B de sous-produit dans le CDCl₃.

Les analyses de chromatographie par perméation de gel (GPC) ont été effectuées sur un appareil Viscotek équipé d'une pompe VE1122 (débit : 1mL/min de THF contenant 0,1 % en masse de nBu₄NBr), d'un détecteur de variation d'indice de réfraction VE3580 thermostaté à 40°C, d'un dégazeur VE7510 (80kPa), d'une précolonne ChromTeck thermostatée à 40°C, d'une « T-Guard » (« Organic Guard column » 10×4,6 mm) et d'une colonne LT5000L (« mixed, medium organic » 300x7,8 mm). Toutes les courbes d'élution ont été mesurées à partir d'une courbe de calibration réalisée avec 7 standards de polystyrènes monodisperses (1160<Mₙ<102000 g.mol⁻¹).

Les analyses RMN en solution ont été effectuées sur un appareil Bruker Avance III 400 MHz équipé d'une sonde BBFO Atma. Les analyses RMN du solide ont été réalisées sur des appareils Bruker Avance I 300 MHZ (7T) munis de sonde CP/MAS 2,5 mm et Bruker AVANCE III 600 MHZ (14T) munis de sonde MAS 2,5 mm dédiée ¹³C-¹¹B (configuration localisée à l'Institut des Sciences Chimiques de Rennes, France), les échantillons étant insérés dans des rotors en ZrO₂ de 2,5 mm.

Les analyses par spectrométrie Infra-Rouge à transformée de Fourier (FTIR) des polymères ont été réalisées sur un appareil Shimadzu IRAffinity-1 équipé d'un module ATR, avec une résolution de 4 cm⁻¹ et d'un détecteur DLaTGS. Le cristal dans le module ATR est du Ge enrobé dans du KBr.

Les analyses thermogravimétriques (ATG) des polymères ont été réalisées sur un appareil Thermogravimetric Analyzer TGA/DSC1 de Mettler Toledo équipé du logiciel Star System, avec une rampe de 10°C/min sous N₂ de 25°C à 500°C et utilisant un creuset Al 40 µl.

Les réactions de polymérisation des exemples répondent aux schémas de synthèse suivants : 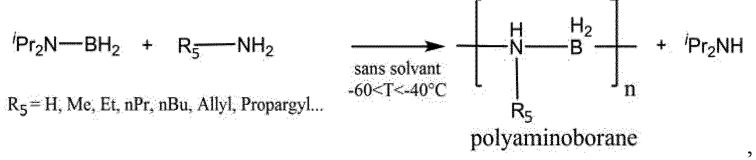 et

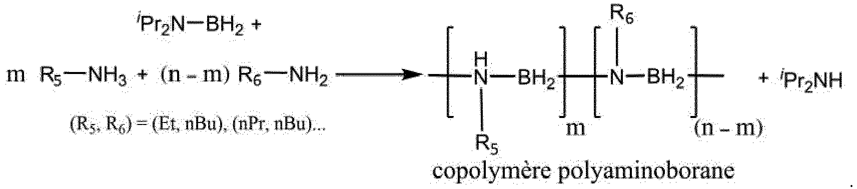

Des polymères obtenus des exemples répondent aux formules suivantes :

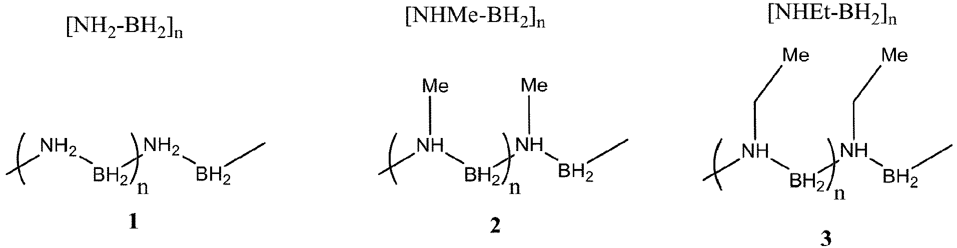

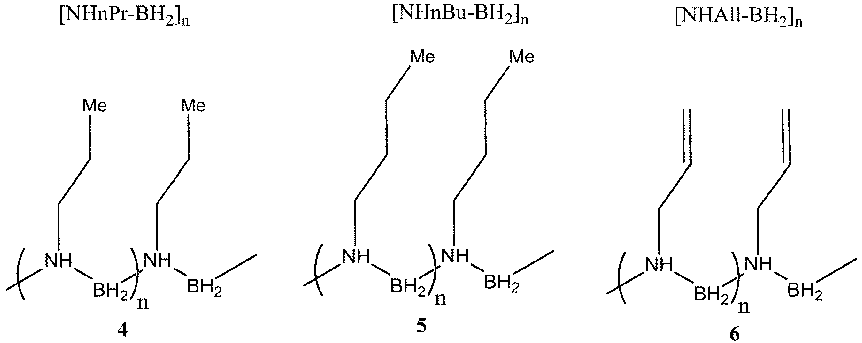

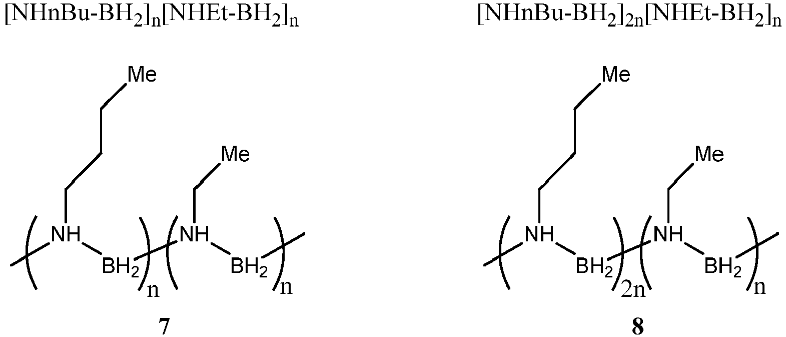

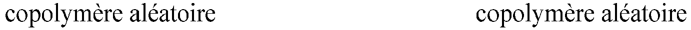

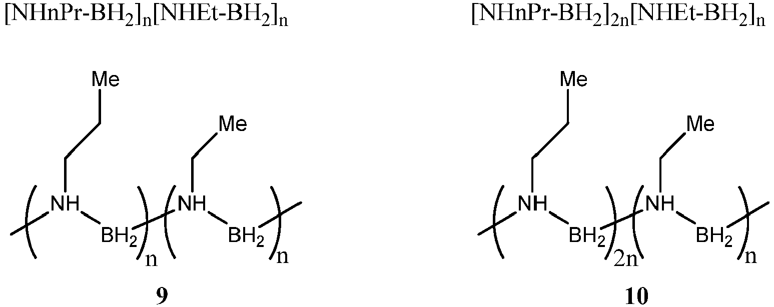

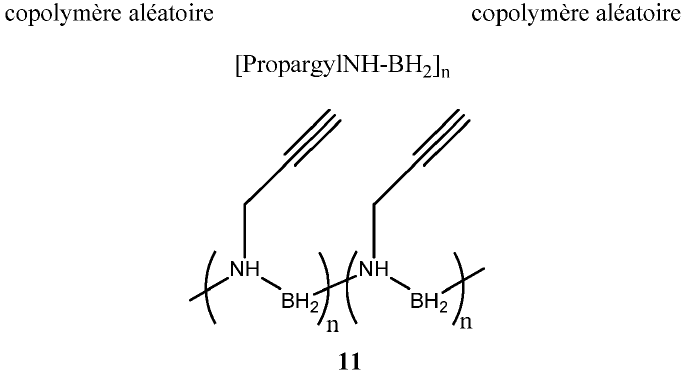

Préparation de polyaminoborane [NH₂-BH₂]ₙ (1) :

| **Protocole B** | | | | | | | |
|---|---|---|---|---|---|---|---|
| **DIAB Q1** (mL) | **A Q2** (NH₃) | **T1** (°C) | **t1** (min) | **t2** (h) | **S** | **V1** (mL) | Rdt massique g (%) |
| 13 | Excés | -40 | 1 | 2 | MeCN | 3x15 | 1.712g (74%) |

Analyse élémentaire de **1** :

| **Element** | **Théorique** | **Expérimental** |
|---|---|---|
| C | 0 | 3.78 |
| H | 13.98 | 13.22 |
| N | 48.55 | 42.62 |

Analyse GPC de **1 : 1** étant un produit insoluble dans les conditions d'analyse GPC, aucun signal n'a été détecté par GPC après filtration et injection.

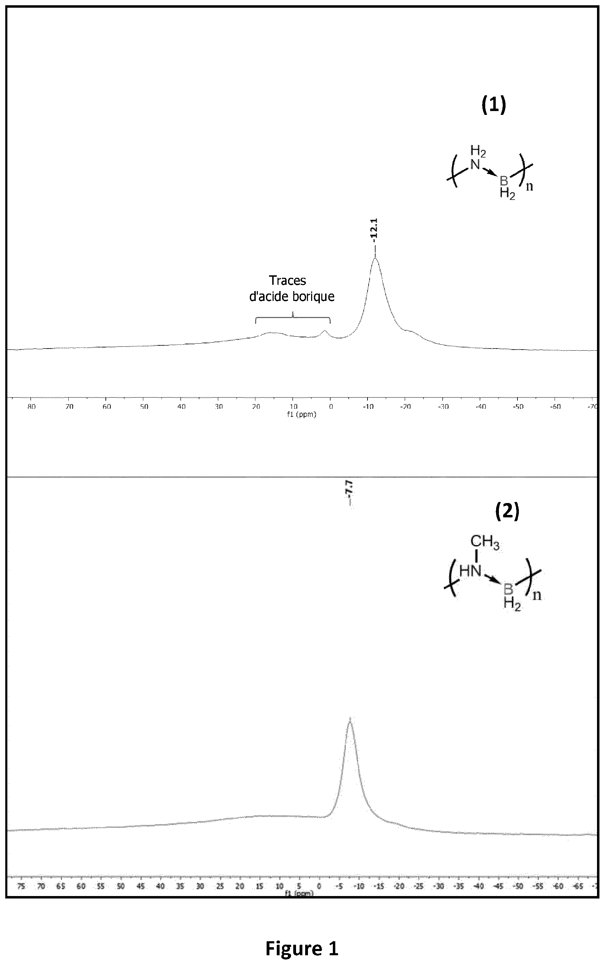

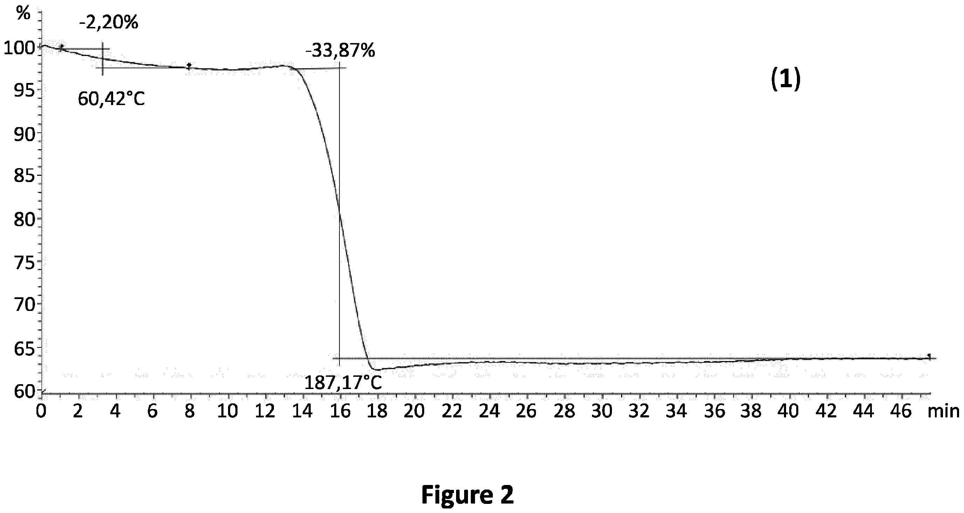

RMN du solide de **1 :** ¹H MAS (303 K ; 300,18 MHz ; *v*ᵣₒₜₒᵣ = 20 KHz) : δ (ppm) -0,65, -2,57. ¹⁵N-CPMAS (303,0 K ; 30,42 MHz : *v*ᵣₒₜₒᵣ = 7 Kh) : δ (ppm) 20,8. Spectre ¹¹B{¹H} RMN solide MAS 7kHz - Echo de Hahn (voir Figure 1). Analyse IR de **1** : *v*_{N-H} ≈ 3250 cm⁻¹ ; *v*_{B-H} ≈ 2300 cm⁻¹. Analyse ATG de **1** : palier 1 : -2,20% soit -0,11 mg, résidu 97,44% soit 4,92 mg, point d'inflexion 39,53°C, point central 60,42°C ; palier 2 : -33,87% soit -1,71 mg, résidu 63,58% soit 3,21 mg, point d'inflexion 193,44°C, point central 187,17°C (voir Figure 2).

Préparation de polyméthylaminoborane [MeNH-BH₂]ₙ **(2)** :

| **Protocole B** | | | | | | | |
|---|---|---|---|---|---|---|---|
| **DIAB Q1** (mL) | **A** (MeNH₂) **Q2** | **T1** (°C) | **t1** (min) | **t2 (h)** | **S** | **V1** (mL) | Rdt massique g(%) |
| 3 | Excès | -40 | 60 | 19 | MeCN | 3x15 | 0.1172 (15%) |

Analyse élémentaire de **2** :

| **Element** | **Théorique** | **Expérimental** |
|---|---|---|
| C | 28.01 | 28.59 |
| H | 14.11 | 13.96 |
| N | 32.67 | 31.74 |

Analyse GPC de 2 : (THF 0,1% en poids (w/w) n-Bu₄NBr) ; 1 mg/mL ; après 1 jour sous agitation et filtration :

| **Start RT (min)** | **Mn** | **Mw** | **Mz** | **Mp** | **PD** |
|---|---|---|---|---|---|
| 6.550 | 74317 | **198131** | 500168 | 134889 | 2.666 |
| 8.933 | 1070 | 1357 | 1674 | 819 | 1.268 |

| | | | | | |
|---|---|---|---|---|---|
| Mn : masse molaire moyenne en nombre Mw : masse molaire moyenne en masse Mz : masse molaire moyenne viscosimétrique Mp : pic de masse molaire PD/PDI : polydispersité (Mw/Mn) | | | | | |

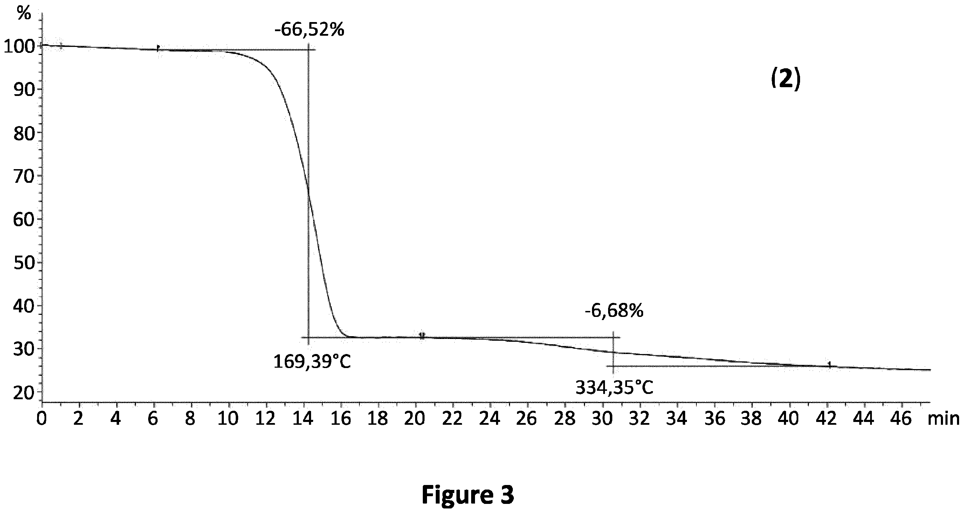

RMN en solution de **2 :** ¹¹B{¹H} (CDC13) : δ (ppm) -6.7. RMN du solide de **2 :** ¹³C CPMAS (303,0 K ; 75,48 MHz; *v*ᵣₒₜₒᵣ = 7 KHz) : δ (ppm) 32,44. Spectre ¹¹B{¹H} RMN solide MAS 7kHz (cw 25W) : δ (ppm) -7.7 (voir Figure 1). Analyse IR de **2 :** *v*_{N-H} ≈ 3250 cm⁻¹ ; *v*_{C-H} ≈ 2950 cm⁻¹ ; *v*_{B-H} ≈ 2300 cm⁻¹. Analyse ATG de **2 :** palier 1 : -66,52% soit -3,69 mg, résidu 32,39% soit 1,79 mg, point d'inflexion 174,32°C, point central 169,39°C ; palier 2 : -6,68% soit -0,37 mg, résidu 25,72% soit 1,42 mg, point d'inflexion 305,45°C, point central 334,35°C (voir Figure 3).

Préparation de polyéthylaminoborane [EtNH-BH₂]ₙ (3) :

| **Protocole A** | | | | | | | |
|---|---|---|---|---|---|---|---|
| **DIAB Q1** (mL) | **A** (EtNH₂) **Q2** (mL) | **T1** (°C) | **t1** (min) | **t2** (h) | **S** | **V1** (mL) | Rdt massique g (%) |
| **3** | 1.3 | -70 | 1 | 19 | Et₂O | 3x15 | 0.5894 g (56%) |

Analyse élémentaire de **3** :

| **Elément** | **Théorique** | **Expérimental** |
|---|---|---|
| C | 42.22 | 41.73 |
| H | 14.17 | 14.30 |
| N | 24.62 | 24.13 |

Analyse GPC de 3 : (THF 0,1% w/w n-Bu₄NBr) ; 1 mg/mL; après 1 jour sous agitation et filtration :

| **Start RT (min)** | **Mn** | **Mw** | **Mz** | **Mp** | **PD** |
|---|---|---|---|---|---|
| 6.730 | 80200 | **218000** | 837000 | 85600 | 2.72 |
| 8.970 | 936 | 1250 | 1730 | 724 | 1.34 |

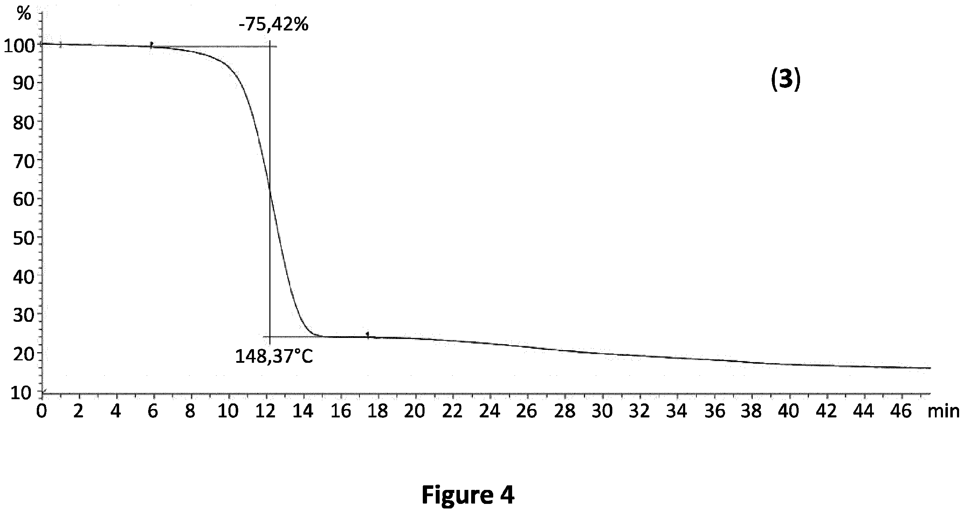

RMN en solution de 3 : ¹H (CDCl₃) : δ (ppm) 1.24 (s, CH₃), 2.50 (s large, CH₂), 2.63 (s large, NH). ¹³C{¹H}(CDCl₃) : δ (ppm) 13.3 (s, CH₃), 46.3 (s, CH₂), ¹¹B{¹H} (CDCl₃) : δ (ppm) -7.0. RMN du solide ¹³C{¹H} CPMAS (303,0 K ; 150,94 MHz ; *v*ᵣₒₜₒᵣ = 7 KHz) : δ (ppm) 44,7, 13,6Analyse IR de **3 :** *v*_{N-H} ≈ 3250 cm⁻¹ ; *v*_{C-H} ≈ 2950 cm⁻¹ ; *v*_{B-H} ≈ 2300 cm⁻¹. Analyse ATG de **3** : palier 1 : -75,42% soit -4,28 mg, résidu 23,78% soit 1,35 mg, point d'inflexion 151,65°C, point central 148,37°C (voir Figure 4).

Préparation de polypropylaminoborane [nPrNH-BH₂]ₙ **(4)** :

| **Protocole A** | | | | | | | |
|---|---|---|---|---|---|---|---|
| **DIAB Q1** (mL) | **A** (nPrNH₂) (mL) | **T1** (°C) | **t1** (min) | **t2** (h) | **S** | **V1** (mL) | Rdt massique g(%) |
| 3 | 1.6 | -70 | 60 | 19 | Et₂O | 3x15 | 0.7720 g (59%) |

Analyse élémentaire de **4** :

| **Elément** | **Théorique** | **Expérimental** |
|---|---|---|
| C | 50.80 | 50.10 |
| H | 14.21 | 14.10 |
| N | 19.75 | 19.43 |

Analyse GPC de **4 :** (THF 0,1% w/w n-Bu₄NBr) ; 1 mg/mL ; après 1 jour sous agitation et filtration :

| **Start RT (min)** | **Mn** | **Mw** | **Mz** | **Mp** | **PD** |
|---|---|---|---|---|---|
| 6.58 | 100000 | **351000** | 1480000 | 123000 | 3.51 |
| 8.85 | 1040 | 1350 | 1810 | 1020 | 1.31 |

RMN en solution de **4 :** ¹H (CDCl₃) : δ (ppm) 0.89 (t, C*H*₃), 1.63 et 1.77 (s large, C*H*₂), 2.36 et 2.47 (s large, C*H*₂-N), 2.71 (s large, N*H*); ¹³C{¹H} (CDCl₃) : δ (ppm) 52.6 (*C*H₂-N), 21.2 (*C*H₂), 11.8 (s, *C*H₃); ¹¹B{¹H} (CDCl₃) : δ (ppm) -7.4. RMN du solide : ¹³C{¹H} CPMAS (303,0 K ; 150,94 MHz; *v*ᵣₒₜₒᵣ = 7 KHz) : δ (ppm) 50,79, 20,70, 11,26. Analyse IR de **4 :** *v*_{N-H} ≈ 3250 cm⁻¹ ; *v*_{C-H} ≈ 2950 cm⁻¹ ; *v*_{B-H} ≈ 2300 cm⁻¹. Analyse ATG de **4** : palier 1 : -44,65% soit -2,72 mg, résidu 54,60% soit 3,33 mg, point d'inflexion 145,06°C, point central 140,46°C ; palier 2 : -21,67% soit -1,32 mg, résidu 32,89% soit 2,01 mg, point d'inflexion 461,19°C, point central 414,99°C.

Préparation de polybutylaminoborane [nBuNH-BH₂]ₙ (5) :

| **Protocole A** | | | | | | | |
|---|---|---|---|---|---|---|---|
| **DIAB Q1** (mL) | **A** (nBuNH₂) **Q2** (mL) | **T1** (°C) | **t1** (min) | **t2** (h) | **S** | **V1** (mL) | Rdt massique g(%) |
| 3 | 1.9 | -50 | 60 | 19 | MeCN | 3x15 | 1.2316 (78%) |

Analyse élémentaire de **5** :

| **Element** | **Théorique** | **Expérimental** |
|---|---|---|
| C | 56.55 | 54.75 |
| H | 14.24 | 14.05 |
| N | 16.49 | 16.20 |

Analyse GPC de **5 :** (THF 0,1% w/w n-Bu₄NBr) ; 1 mg/mL ; après 1 jour sous agitation et filtration :

| **Start RT (min)** | **Mn** | **Mw** | **Mz** | **Mp** | **PDI** |
|---|---|---|---|---|---|
| 5.72 | 517000 | **2990000** | 17200000 | 1440000 | 5.78 |
| 8.83 | 1190 | 1290 | 1430 | 1060 | 1.08 |

RMN en solution de **5 :** ¹H (CDCl₃) : δ (ppm) 0.92 (t, C*H*₃), 1.31 (s large, C*H*₂), 1.57 et 1.76 (s large, C*H*₂), 2.37 et 2.52 (s large, C*H*₂-N), 2.69 (s large, N*H*); ¹³C{¹H} (CDCl₃) : δ (ppm) 50.8 (*C*H₂-N), 30.2 (s C*H*₂), 20.85 (s C*H*₂), 14.05 (s *C*H₃); ¹¹B{¹H} (CDCl₃) : δ (ppm) -7.6. RMN du solide de **5** : ¹³C{¹H} CPMAS (303,0 K ; 150,94 MHz ; *v*ᵣₒₜₒᵣ = 7 KHz) : δ (ppm) 49,64, 29,75, 20,20, 13,50.. Analyse IR de **5** : *v*_{N-H} ≈ 3250 cm⁻¹ ; *v*_{C-H} ≈ 2950 cm⁻¹ ; *v*_{B-H} ≈ 2300 cm⁻¹. Analyse ATG de **5 :** palier 1 : -31,65% soit -1,73 mg, résidu 64,99% soit 3,54 mg, point d'inflexion 152,35°C, point central 151,86°C ; palier 2 : -23,00% soit -1,25 mg, résidu 42,01% soit 2,29 mg, point d'inflexion 496,06°C, point central 454,49°C.

Préparation de polyallylaminoborane [AllNH-BH₂]ₙ (6) :

| **Protocole A** | | | | | | | |
|---|---|---|---|---|---|---|---|
| **DIAB Q1** (mL) | **A** (AllNH₂) **Q2** (mL) | **T1** (°C) | **t1** (min) | **t2 (h)** | **S** | **V1** (mL) | Rdt massique g (%) |
| 3 | 1.4 | -50 | 60 | 19 | MeCN | 3x15 | 0.6162 (48%) |

Analyse élémentaire de **6** :

| **Element** | **Théorique** | **Expérimental** |
|---|---|---|
| C | 52.29 | 43.08 |
| H | 11.70 | 10.27 |
| N | 20.33 | 16.28 |

Analyse GPC de **6 :** (THF 0,1% w/w n-Bu₄NBr) ; 1 mg/mL ; après 1 jour sous agitation et filtration :

| **Start RT (min)** | **Mn** | **Mw** | **Mz** | **Mp** | **PDI** |
|---|---|---|---|---|---|
| 6.58 | 161000 | **389000** | 1120000 | 121000 | 2.42 |
| 8.57 | 2330 | 2440 | 2560 | 2060 | 1.05 |
| 8.97 | 811 | 865 | 929 | 748 | 1.07 |

RMN en solution de **6 :** ¹H (CDCl₃) : δ (ppm) 6.08 (m), 5.29 (d), 5.19 (d) (C_{H}), 3.12 (s large, C*H*₂), 2.98 (s large, N*H*); ¹³C{¹H} (CDCl₃) : δ (ppm) 134.08 (s), 119.47 (s), 53.38 (s); ¹¹B{¹H} (CDCl₃) : δ (ppm) -7.3. RMN du solide de **6 :** ¹³C{¹H} CPMAS (303,0 K ; 75,48 MHz ; *v*ᵣₒₜₒᵣ = 7 KHz) : δ (ppm) 160,97, 151,15, 130,55, 115,09, 48,25. Analyse IR de **6 :** *v*_{N-H} ≈ 3250 cm⁻¹ ; *v*_{C-H} ≈ 2950 cm⁻¹ ; *v*_{B-H} ≈ 2300 cm⁻¹. Analyse ATG de 6 : palier 1 : -7,83% soit -0,46 mg, résidu 91,21% soit 5,34 mg, point d'inflexion 118,05°C, point central 114,07°C ; palier 2 : -8,89% soit -0,52 mg, résidu 82,19% soit 4,81 mg, point d'inflexion 163,87°C, point central 169,27°C ; palier 3 : -48,07% soit -2,81 mg, résidu 34,07% soit 1,99 mg, point d'inflexion 297,69°C, point central 297,27°C.

Préparation de copolymère polybutylaminoborane/polyéthylaminoborane [nBuNH-BH₂]ₙ[EtNH-BH₂]ₙ (7) :

| **Protocole A** | | | | | | | |
|---|---|---|---|---|---|---|---|
| **DIAB Q1** (mL) | **A** (nBuNH₂/EtNH₂) **Q2** (mL) | **T1 (°C)** | **t1** (min) | **t2** (h) | **S** | **V1** (mL) | Rdt massique g (%) |
| 3 | 0.9/0.6 | -70 | 60 | 19 | MeCN | 3x15 | 0.8462 (64%) |

Analyse élémentaire de **7** :

| **Element** | **Théorique** | **Expérimental** |
|---|---|---|
| C | 50.80 | 48.68 |
| H | 14.21 | 13.73 |
| N | 19.75 | 19.12 |

Analyse GPC de 7 : (THF 0,1% w/w n-Bu₄NBr) ; 1 mg/mL ; après 1 jour sous agitation et filtration :

| **Start RT (min)** | **Mn** | **Mw** | **Mz** | **Mp** | **PDI** |
|---|---|---|---|---|---|
| 5.98 | 268000 | **1040000** | 4060000 | 609000 | 3.86 |
| 8.90 | 930 | 1040 | 1180 | 897 | 1.11 |

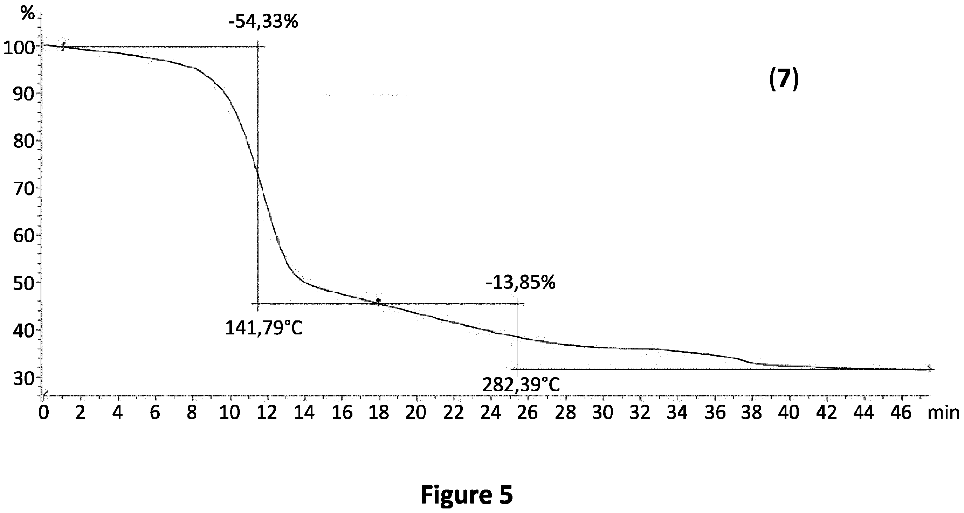

RMN en solution de 7 : ¹H (CDCl₃) : δ (ppm) 0.92 (t, C*H*₃ Bu), 1.23 (s large, C*H*₃ Et), 1.30 (m large, C*H*₂ Bu), 1.77 et 1.57 (s large, C*H*₂ Bu), 2.38 et 2.47 (s large, C*H*₂ Bu), 2.54 et 2.63 (s large, C*H*₂ Et); ¹³C{¹H} (CDCl₃) : δ (ppm) 50.91 (s, CH₂-N, Bu), 45.23 (s, CH₂-N Et), 30.22 et 20.84 (s, *C*H₂ Bu), 14.07 (s, *C*H₃ Bu), 13.33 (s, C*H*₃ Et); ¹¹B{¹H} (CDCl₃) : δ (ppm) -7.4.. RMN du solide de 7 : ¹³C{¹H} CPMAS (303,0 K ; 150,94 MHz ; *v*ᵣₒₜₒᵣ = 7 KHz) : δ (ppm) 49,23, 44,43, 29,90, 20,35, 13,53. Analyse IR de 7 : *v*_{N-H} ≈ 3250 cm⁻¹; *v*_{C-H} ≈ 2950 cm⁻¹ ; *v*_{B-H} ≈ 2300 cm⁻¹. Analyse ATG de 7 : palier 1 : -54,33% soit - 2,64 mg, résidu 45,38% soit 2,20 mg, point d'inflexion 144,35°C, point central 141,79°C ; palier 2 : -13,85% soit -0,67 mg, résidu 34,49% soit 1,53 mg, point d'inflexion 220,81°C, point central 282,39°C (voir Figure 5).

Préparation de copolymère polybutylaminoborane/polyéthylaminoborane [nBuNH-BH₂]₂ₙ[EtNH-BH₂]ₙ **(8)** :

| **Protocole A** | | | | | | | |
|---|---|---|---|---|---|---|---|
| **DIAB Q1** (mL) | **A** (nBuNH₂/EtNH₂) **Q2** (mL) | **T1** (°C) | **t1** (min) | **t2** (h) | **S** | **V1** (mL) | Rdt massique g(%) |
| 3 | 1.2/0.4 | -65 | 60 | 19 | MeCN | 2x15 | 0.2782 (23.5%) |

Analyse élémentaire de **8** :

| **Element** | **Théorique** | **Expérimental** |
|---|---|---|
| C | 52.95 | 51.48 |
| H | 14.22 | 13.98 |
| N | 18.53 | 18.99 |

Analyse GPC de **8 :** (THF 0,1% w/w n-Bu₄NBr) ; 1 mg/mL ; après 1 jour sous agitation et filtration :

| **Start RT (min)** | **Mn** | **Mw** | **Mz** | **Mp** | **PDI** |
|---|---|---|---|---|---|
| 6.08 | 257000 | **705000** | 2070000 | 466000 | 2.74 |
| 8.92 | 926 | 1070 | 1310 | 830 | 1.16 |

RMN du solide de **8** : ¹³C{¹H} CPMAS (303,0 K ; 150,94 MHz ; *v*ᵣₒₜₒᵣ = 7 KHz) : δ (ppm) 49,97, 44,01, 29,59, 20,32, 13,51. Analyse IR de **8** : *v*_{N-H} ≈ 3250 cm⁻¹ ; *v*_{C-H} ≈ 2950 cm⁻¹ ; *v*_{B-H} ≈ 2300 cm⁻¹. Analyse ATG de **8** : palier 1 : -28,25% soit -1,29 mg, résidu 70,53% soit 3,23 mg, point d'inflexion 144,84°C, point central 137,56°C ; palier 2 : -13,84% soit -0,63 mg, résidu 56,61% soit 2,59 mg, point d'inflexion 187,14°C, point central 198,39°C ; palier 3 : -21,45% soit -0,98 mg, résidu 35,00% soit 1,60 mg, point d'inflexion 451,20°C, point central 414,18°C.

Préparation de copolymère polypropylaminoborane/polyéthylaminoborane [nPrNH-BH₂]ₙ[EtNH-BH₂]ₙ **(9)** :

| **Protocole A** | | | | | | | |
|---|---|---|---|---|---|---|---|
| **DIAB Q1** (mL) | **A** (nPrNH₂/EtNH₂) **Q2** (mL) | **T1** (°C) | **t1** (min) | **t2 (h)** | **S** | **V1** (mL) | Rdt massique g(%) |
| 3 | 0.8/0.6 | -60 | 60 | 19 | MeCN | 3x15 | 0.4122 (35%) |

Analyse élémentaire de **9** :

| **Element** | **Theorique** | **Expérimental** |
|---|---|---|
| C | 46.98 | 41.54 |
| H | 14.19 | 12.97 |
| N | 21.91 | 19.50 |

Analyse GPC de **9** : (THF 0,1% w/w n-Bu₄NBr); 1 mg/mL ; après 1 jour sous agitation et filtration :

| **Start RT (min)** | **Mn** | **Mw** | **Mz** | **Mp** | **PDI** |
|---|---|---|---|---|---|
| 6.65 | 24700 | **68600** | 128000 | 103000 | 2.78 |
| 8.88 | 965 | 1100 | 1250 | 914 | 1.14 |

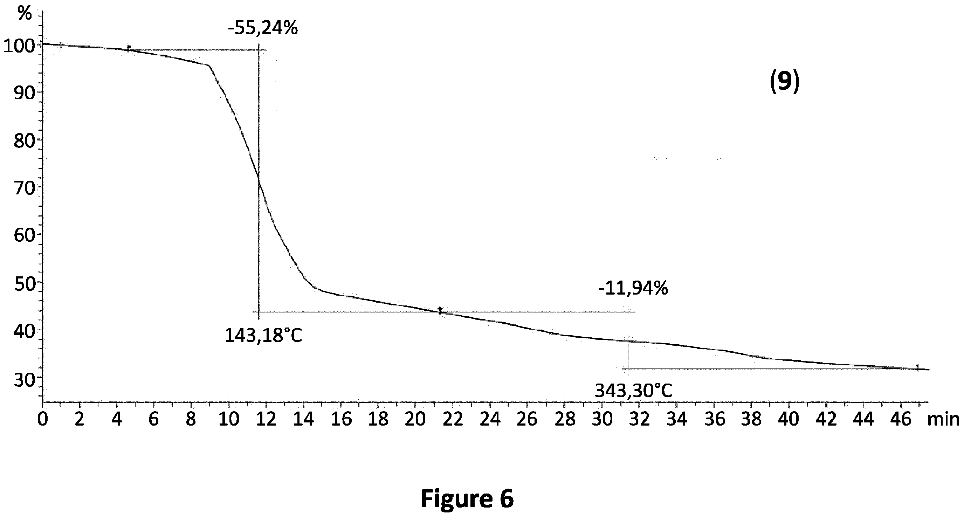

RMN du solide de **9 :** ¹³C{¹H} CPMAS (303,0 K ; 150,94 MHz ; *v*ᵣₒₜₒᵣ = 7 KHz) : δ (ppm) 50,18, 44,09, 21,34, 13,28, 11,61. Analyse IR de **9** : *v*_{N-H} ≈ 3250 cm⁻¹ ; v_{C-H} ≈ 2950 cm⁻¹ ; *v*_{B-H} ≈ 2300 cm⁻¹. Analyse ATG de **9 :** palier 1 : -55,24% soit -3,25 mg, résidu 43,40% soit 2,56 mg, point d'inflexion 143,76°C, point central 143,18°C ; palier 2 : -11,94% soit -0,70 mg, résidu 31,46% soit 1,85 mg, point d'inflexion 297,75°C, point central 343,30°C (voir Figure 6).

Préparation de copolymère polypropylaminoborane/polyéthylaminoborane [nPrNH-BH₂]₂ₙ[EtNH-BH₂]ₙ **(10)** :

| **Protocole B** | | | | | | | |
|---|---|---|---|---|---|---|---|
| **DIAB Q1** (mL) | **A** (nPrNH_{2/}EtNH₂) **Q2** (mL) | **T1** (°C) | **t1** (min) | **t2 (h)** | **S** | **V1** (mL) | Rdt massique g(%) |
| 3 | 1.02/0.4 | -50 | 60 | 19 | MeCN | 3x15 | 0.7480 (61%) |

Analyse élémentaire de **10** :

| **Element** | **Théorique** | **Expérimental** |
|---|---|---|
| C | 48.34 | 44.20 |
| H | 14.20 | 13.53 |
| N | 21.14 | 19.52 |

Analyse GPC de **10 :** (THF 0,1% w/w n-Bu₄NBr) ; 1 mg/mL ; après 1 jour sous agitation et filtration :

| **Start RT (min)** | **Mn** | **Mw** | **Mz** | **Mp** | **PDI** |
|---|---|---|---|---|---|
| 6.52 | 185000 | **1030000** | 4180000 | 141000 | 5.57 |
| 8.88 | 945 | 1100 | 1310 | 923 | 1.16 |

RMN en solution de **10 :** RMN ¹H (CDCl₃) : δ (ppm) 0.90 (t, C*H*₃ Pr), 1.23 (s large, C*H*₃ Et), 1.79 et 1.62 (s large, C*H*₂ Pr), 2.47 et 2.36 (s large, CH₂-N Pr), 2.66 (s large, *CH2-N* Et); ¹³C{¹H} (CDCl₃) : δ (ppm) 52.71 (CH₂-N Pr), 45.18 (*C*H₂-N Et), 21.16 (CH₂ Pr), 13.26 (*C*H₃ Et), 11.83 (*C*H₃ Pr); ); ¹¹B{¹H} (CDCl₃) : δ (ppm) -6.8. RMN du solide de **10** : ¹³C{¹H} CPMAS (303,0 K ; 150,94 MHz ; *v*ᵣₒₜₒᵣ = 7 KHz) : δ (ppm) 50.8, 43.0, 20.6, 11.6. Analyse IR de **10** : *v*_{N-H} ≈ 3250 cm⁻¹ ; *v*_{C-H} ≈ 2950 cm⁻¹ ; *v*_{B-H} ≈ 2300 cm⁻¹. Analyse ATG de **10** : palier 1 : -54,88% soit -2,70 mg, résidu 43,71% soit 2,15 mg, point d'inflexion 147,90°C, point central 144,19°C ; palier 2 : -16,11% soit -0,79 mg, résidu 27,60% soit 1,36 mg, point d'inflexion 269,12°C, point central 306,76°C.

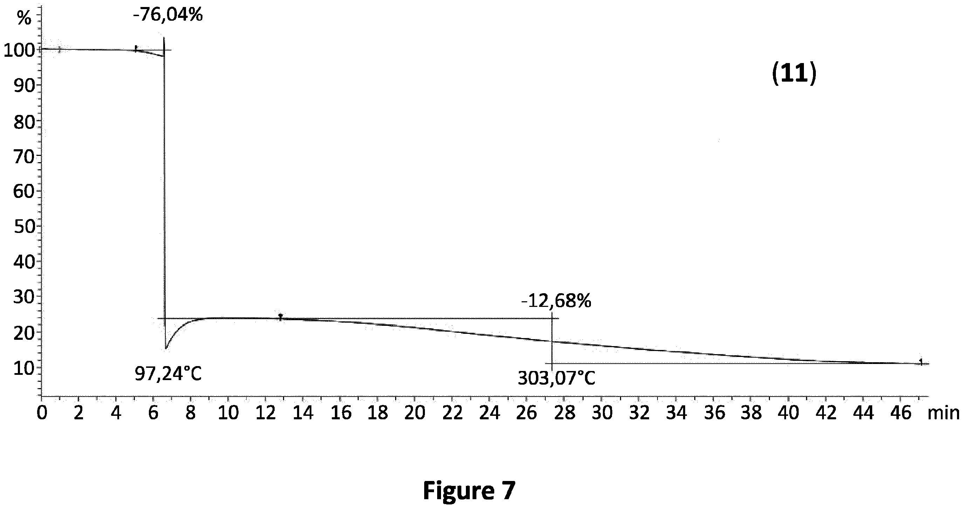

La préparation de propargylaminoborane [PropargylNH-BH₂]₂ₙ **(11)** : **11** peut être préparé selon le protocole général A ou B, par exemple comme définis ci-dessus pour la préparation des polymères **1** à **6.** Analyse ATG de **11** : palier 1 : -76,04% soit -4,51 mg, résidu 23,46% soit 1,39 mg, point d'inflexion 97,21°C, point central 97,24°C ; palier 2 : - 12,68% soit -0,75 mg, résidu 10,78% soit 0,64 mg, point d'inflexion 238,20°C, point central 303,07°C (voir Figure 7).

Une valeur du nombre de motifs de répétition n comme définie dans la Table 1 ci-dessous, peut être estimée en divisant la masse molaire moyenne en masse Mw obtenue par GPC, par la masse molaire M du monomère.

**TABLE 1**

| | M_{monomère} (g.mol⁻¹) | n (polymère) | n (oligomères 1) | n (oligomères 2) |
|---|---|---|---|---|
| (MeNHBH₂)ₙ (**2**) | 42,88 | 4620 | 32 | - |
| (EtNHBH₂)ₙ (**3**) | 56,90 | 3831 | 22 | - |
| (PrNHBH₂)ₙ (**4**) | 70,93 | 4949 | 19 | - |
| (BuNHBH₂)ₙ (**5**) | 84,96 | 35193 | 15 | - |
| (AllNHBH₂)ₙ (**6**) | 68,91 | 5645 | 35 | 12 |

Pour les copolymères, une valeur du nombre de motifs de répétition n peut également être estimée (voir Table 2 ci-dessous). On considère que le copolymère est un polymère constitué d'un monomère fictif dont la masse molaire M̅ est la moyenne de la masse molaire des monomères qui le composent et qui dépend du rapport molaire des réactifs utilisés en considérant qu'ils réagissent à l'identique.

**TABLE 2**

| | M̅_{monomère} (g.mol-1) | n (polymère) | n (oligomères) |
|---|---|---|---|
| (nBuNH-BH₂)_{n/2}(EtNH-BH₂)_{n/2} (**7**) | 70,93 | 14662 | 15 |
| (nBuNH-BH₂)_{2n/3}(EtNH-BH₂)_{n/3} (**8**) | 75,61 | 9324 | 14 |
| (nPrNH-BH₂)_{n/2}(EtNH-BH₂)_{n/2} (**9**) | 63,915 | 1073 | 17 |
| (nPrNH-BH₂)_{2n/3}(EtNH-BH₂)_{n/3} (**10**) | 66,253 | 15546 | 17 |

Bien que des modes de réalisation et exemples mentionnés ci-dessus soient décrits en détail, il est entendu que des modes de réalisation supplémentaires peuvent être envisagés. Par exemple, les polyaminoboranes selon la présente description peuvent être préparés à partir d'aminoboranes autre que le diisopropylaminoborane et/ou à partir d'amines autres que l'ammoniac et les amines primaires de méthyle, éthyle, n-propyle, n-butyle, allyle et propargyle. En effet, l'aminoborane étant plus encombré stériquement que le monomère au moyen du groupe amino secondaire, la réaction de polymérisation peut être effectuée au moyen d'une large gamme d'aminoboranes, amines primaires et hydrazines. Aussi, les polyaminoboranes selon la présente description peuvent être préparés au moyen de conditions réactionnelles autres que celle décrites en détail dans les exemples. Par exemple, des polyaminoboranes peuvent être obtenus au moyen de quantités de réactifs, de rapports molaires, de températures et de durées autres que celles indiquées dans les exemples. De plus, sauf spécification contraire dans la présente description, il sera apparent pour l'homme du métier que tous les modes de réalisation décrits ci-dessus peuvent être combinés entre eux. Par exemple, sauf spécification contraire, toutes les caractéristiques des modes de réalisation décrits ci-dessus, peuvent être combinées avec ou remplacées par d'autres caractéristiques d'autres modes de réalisation.

## Revendications

1. Procédé de préparation d'un polyaminoborane comprenant la réaction d'au moins un monomère avec un aminoborane, dans lequel l'au moins un monomère est choisi parmi le groupe constitué par l'ammoniac, une amine primaire et une hydrazine substituée ou non substituée ; et dans lequel l'aminoborane comprend un borane substitué d'un groupe amino secondaire,
dans lequel l'aminoborane répond à la formule R¹R²N-BR³R⁴, le monomère répond à la formule R⁵NH₂ et le polyaminoborane répond à la formule [R⁵NH-BR³R⁴]ₙ,
dans lequel R¹ et R² sont des groupes organiques identiques ou différents, linéaires, ramifiés, cycliques ou cycliques et ramifiés, ayant de 2 à 30 atomes de carbones ; ou R¹ et R² forment ensemble un groupe organique cyclique ou cyclique et ramifié, ayant de 2 à 30 atomes de carbones ;
dans lequel R³ et R⁴ sont identiques ou différents et choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbones ; ou R³ et R⁴ forment ensemble un groupe organique cyclique ou cyclique et ramifié, ayant de 3 à 30 atomes de carbones ;
dans lequel R⁵ est choisi parmi le groupe constitué par un atome d'hydrogène, un atome d'azote substitué ou non substitué et un groupe organique linéaire, ramifié, cyclique ou cyclique et ramifié et ayant de 1 à 30 atomes de carbones ; et
dans lequel n est un nombre supérieur à 10.

2. Procédé selon la revendication 1, dans lequel l'aminoborane répond à la formule R¹R²N-BR³R⁴, un premier monomère répond à la formule R⁵NH₂, un deuxième monomère répond à la formule R⁶NH₂ et le polyaminoborane répond à la formule [R⁵NH-BR³R⁴]ₘ[R⁶NH-BR³R⁴]₍ₙ₋ₘ₎,
dans lequel R¹ et R² sont des groupes organiques identiques ou différents, linéaires, ramifiés, cycliques ou cycliques et ramifiés, ayant de 2 à 30 atomes de carbones ; ou R¹ et R² forment ensemble un groupe organique cyclique ou cyclique et ramifié, ayant de 2 à 30 atomes de carbones ;
dans lequel R³ et R⁴ sont identiques ou différents et choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbones ; ou R³ et R⁴ forment ensemble un groupe organique cyclique ou cyclique et ramifié, ayant de 3 à 30 atomes de carbones ;
dans lequel R⁵ et R⁶ sont différents et choisis parmi le groupe constitué par un atome d'hydrogène, un atome d'azote substitué ou non substitué et un groupe organique linéaire, ramifié, cyclique ou cyclique et ramifié et ayant de 1 à 30 atomes de carbones ;
dans lequel n est un nombre supérieur à 10 ; et
dans lequel m est un nombre supérieur ou égal à 10 et inférieur à n.

3. Procédé selon l'une quelconque des revendications précédentes, dans lequel au moins un de R¹ et R² est un groupe organique ramifié, cyclique ou cyclique et ramifié, ayant de 3 à 24 atomes de carbones ; ou R¹ et R² forment ensemble un groupe organique cyclique ou cyclique et ramifié, ayant de 3 à 24 atomes de carbones.

4. Procédé selon l'une quelconque des revendications précédentes, dans lequel le groupe amino secondaire répond à une des formules suivantes : 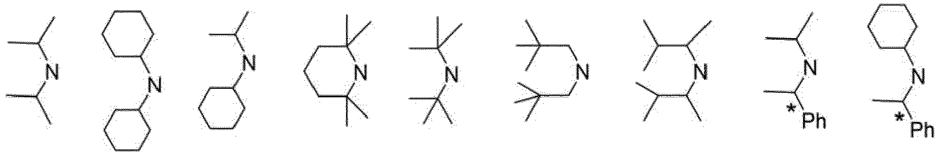 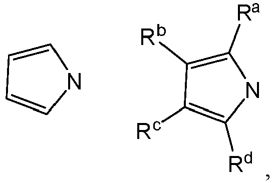 dans lequel R^{a} à R^{d} sont indépendamment choisis parmi le groupe constitué par un atome d'hydrogène et des substituants hydrocarbonés.

5. Procédé selon l'une quelconque des revendications précédentes, dans lequel l'aminoborane est un diisopropylaminoborane.

6. Procédé selon l'une quelconque des revendications précédentes, dans lequel au moins un de R³ et R⁴ est un atome d'hydrogène.

7. Procédé selon l'une quelconque des revendications précédentes, dans lequel au moins un de R⁵ et R⁶ est choisi parmi le groupe constitué par un atome d'hydrogène, un atome d'azote substitué ou non substitué, un méthyle, un éthyle, un n-propyle, un n-butyle, un allyle substitué ou non substitué, un propargyle substitué ou non substitué et un groupe organique linéaire, ramifié, cyclique ou cyclique et ramifié, ayant de 3 à 24 atomes de carbones et substitué d'au moins un groupe alcène, alcyne, éther, thioéther, amine secondaire, phosphine et/ou silyle.

8. Polyaminoborane comprenant au moins un motif de répétition répondant à la formule R⁵NH-BR³R⁴, dans lequel R³ et R⁴ sont identiques ou différents et sont choisis dans le groupe constitué par un atome d'hydrogène, un hétéroatome substitué ou non substitué et un groupe organique, linéaire, ramifié, cyclique ou cyclique et ramifié, ayant de 1 à 30 atomes de carbones ; ou R³ et R⁴ forment ensemble un groupe organique cyclique ou cyclique et ramifié, ayant de 3 à 30 atomes de carbones ; dans lequel R⁵ est choisi parmi le groupe constitué par un atome d'hydrogène, un atome d'azote substitué ou non substitué et un groupe organique linéaire, ramifié, cyclique ou cyclique et ramifié et ayant de 1 à 30 atomes de carbones ;
- dans lequel si R⁵ est un atome hydrogène ou un méthyle, au moins un de R³ et R⁴ n'est pas un atome d'hydrogène ; et
- dans lequel si R⁵ est un groupe n-butyle, au moins un de R³ et R⁴ n'est pas un atome d'hydrogène ou le polyaminoborane a une masse molaire moyenne en masse supérieure ou égale à 500000.

9. Polyaminoborane selon la revendication 8, dans lequel le polyaminoborane répond à au moins une des formules suivantes :
[R⁵NH-BR³R⁴]ₙ, dans lequel n est un nombre supérieur à 10 ; et
[R⁵NH-BR³R⁴]ₘ[R⁶NH-BR³R⁴]₍ₙ₋ₘ₎, dans lequel n est un nombre supérieur à 10 et m est un nombre supérieur ou égal à 10 et inférieur à n ; dans lequel R⁶ est diffèrent de R⁵ et R⁶ est choisi parmi le groupe constitué par un atome d'hydrogène, un atome d'azote substitué ou non substitué et un groupe organique linéaire, ramifié, cyclique ou cyclique et ramifié, ayant de 1 à 30 atomes de carbones ; et dans lequel si R⁵ est un méthyle, au moins un de R³ et R⁴ n'est pas un atome d'hydrogène, ou R⁶ n'est pas un atome d'hydrogène ou un n-butyle.

10. Polyaminoborane selon la revendication 8 ou la revendication 9, dans lequel au moins un de R³ et R⁴ est un atome d'hydrogène.

11. Polyaminoborane selon l'un quelconque des revendications 8 à 10, dans lequel au moins un de R⁵ et R⁶ est choisi parmi le groupe constitué par un atome d'hydrogène, un atome d'azote substitué ou non substitué, un méthyle, un éthyle, un n-propyle, un n-butyle, un allyle substitué ou non substitué, un propargyle substitué ou non substitué et un groupe organique linéaire, ramifié, cyclique ou cyclique et ramifié, ayant de 3 à 24 atomes de carbones et substitué d'au moins un groupe alcène, alcyne, éther, thioéther, amine secondaire, phosphine et/ou silyle.

12. Utilisation d'un polyaminoborane selon l'une quelconque des revendications 8 à 11 pour la préparation d'un précurseur de céramique ou d'une céramique, la production de nitrure de bore ou le stockage et/ou la production de dihydrogène.

13. Précurseur de céramique ou céramique comprenant un polyaminoborane selon l'une quelconque des revendications 8 à 11.

14. Pile à hydrogène ou matériau énergétique comprenant un polyaminoborane selon l'une quelconque des revendications 8 à 11.

## Patentansprüche

1. Verfahren zum Herstellen eines Polyaminoborans, umfassend Reagieren wenigstens eines Monomers mit einem Aminoboran, wobei das wenigstens eine Monomer ausgewählt ist aus der Gruppe bestehend aus Ammoniak, einem primären Amin und einem substituierten oder unsubstituierten Hydrazin; und wobei das Aminoboran ein Boran substituiert mit einer sekundären Aminogruppe umfasst,
wobei das Aminoboran die Formel R¹R²N-BR³R⁴ hat, das Monomer die Formel R⁵NH₂ hat und das Polyaminoboran die Formel [R⁵NH-BR³R⁴]ₙ hat,
wobei R¹ und R² gleiche oder unterschiedliche, lineare, verzweigte, cyclische oder cyclische und verzweigte organische Gruppen mit 2 bis 30 Kohlenstoffatomen sind; oder R¹ und R² zusammen eine cyclische oder cyclische und verzweigte, organische Gruppe mit 2 bis 30 Kohlenstoffatomen bilden;
wobei R³ und R⁴ gleich oder verschieden sind und ausgewählt sind aus der Gruppe bestehend aus einem Wasserstoffatom, einem substituierten oder unsubstituierten Heteroatom und einer linearen, verzweigten, cyclischen oder cyclischen und verzweigten organischen Gruppe mit 1 bis 30 Kohlenstoffatomen; oder R³ und R⁴ zusammen eine cyclische oder cyclische und verzweigte organische Gruppe mit 3 bis 30 Kohlenstoffatomen bilden;
wobei R⁵ ausgewählt ist aus der Gruppe bestehend aus einem Wasserstoffatom, einem substituierten oder unsubstituierten Stickstoffatom und einer linearen, verzweigten, cyclischen oder cyclischen und verzweigten organischen Gruppe mit 1 bis 30 Kohlenstoffatomen; und
wobei n eine Zahl größer als 10 ist.

2. Verfahren nach Anspruch 1, wobei das Aminoboran die Formel R¹R²N-BR³R⁴ hat, ein erstes Monomer die Formel R⁵NH₂ hat, ein zweites Monomer die Formel R⁶NH₂ hat und das Polyaminoboran die Formel hat [R⁵NH-BR³R⁴]ₘ[R⁶NH-BR³R⁴]₍ₙ₋ₘ₎,
wobei R¹ und R² die gleichen oder unterschiedliche, lineare, verzweigte, cyclische oder cyclische und verzweigte organische Gruppen mit 2 bis 30 Kohlenstoffatomen sind; oder R¹ und R² zusammen eine cyclische oder cyclische und verzweigte organische Gruppe mit 2 bis 30 Kohlenstoffatomen bilden;
wobei R³ und R⁴ gleich oder verschieden sind und ausgewählt sind aus der Gruppe bestehend aus einem Wasserstoffatom, einem substituierten oder unsubstituierten Heteroatom und einer linearen, verzweigten, cyclischen oder cyclischen und verzweigten organischen Gruppe mit 1 bis 30 Kohlenstoffatomen; oder R³ und R⁴ zusammen eine cyclische oder cyclische und verzweigte organische Gruppe mit 3 bis 30 Kohlenstoffatomen bilden;
wobei R⁵ und R⁶ verschieden sind und ausgewählt sind aus der Gruppe bestehend aus einem Wasserstoffatom, einem substituierten oder unsubstituierten Stickstoffatom und einer linearen, verzweigten, cyclischen oder cyclischen und verzweigten organischen Gruppe mit 1 bis 30 Kohlenstoffatomen;
wobei n eine Zahl größer als 10 ist; und
wobei m eine Zahl größer oder gleich 10 und kleiner als n ist.

3. Verfahren nach einem der vorherigen Ansprüche, wobei mindestens eines von R¹ und R² eine verzweigte, cyclische oder cyclische und verzweigte organische Gruppe mit 3 bis 24 Kohlenstoffatomen ist; oder R¹ und R² zusammen eine cyclische oder cyclische und verzweigte organische Gruppe mit 3 bis 24 Kohlenstoffatomen bilden.

4. Verfahren nach einem der vorherigen Ansprüche, wobei die sekundäre Aminogruppe eine der folgenden Formeln hat: 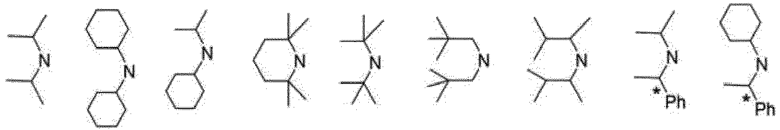 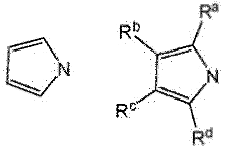 wobei R^{a} bis R^{d} unabhängig ausgewählt sind aus der Gruppe bestehend aus einem Wasserstoffatom und Kohlenwasserstoffsubstituenten.

5. Verfahren nach einem der vorherigen Ansprüche, wobei das Aminoboran ein Diisopropylaminoboran ist.

6. Verfahren nach einem der vorherigen Ansprüche, wobei mindestens eines von R³ und R⁴ ein Wasserstoffatom ist.

7. Verfahren nach einem der vorherigen Ansprüche, wobei mindestens eines von R⁵ und R⁶ ausgewählt ist aus der Gruppe bestehend aus einem Wasserstoffatom, einem substituierten oder unsubstituierten Stickstoffatom, einem Methyl, einem Ethyl, einem n-Propyl, einem n-Butyl, einem substituierten oder unsubstituierten Allyl, einem substituierten oder unsubstituierten Propargyl und einer linearen, verzweigten, cyclischen oder cyclischen und verzweigten organische Gruppe mit 3 bis 24 Kohlenstoffatomen substituiert mit mindestens einer Alken-, Alkin-, Ether-, Thioether-, sekundären Amin-, Phosphin- und/oder Silyl-Gruppe.

8. Polyaminoboran, umfassend mindestens eine Wiederholungseinheit der Formel R⁵NH-BR³R⁴, wobei R³ und R⁴ gleich oder verschieden sind und ausgewählt sind aus der Gruppe bestehend aus einem Wasserstoffatom, einem substituierten oder unsubstituierten Heteroatom und einer linearen, verzweigten, cyclischen oder cyclischen und verzweigten organischen Gruppe mit 1 bis 30 Kohlenstoffatomen; oder R³ und R⁴ zusammen eine cyclische oder cyclische und verzweigte organische Gruppe mit 3 bis 30 Kohlenstoffatomen bilden; wobei R⁵ ausgewählt ist aus der Gruppe bestehend aus einem Wasserstoffatom, einem substituierten oder unsubstituierten Stickstoffatom und einer linearen, verzweigten, cyclischen oder cyclischen und verzweigten organischen Gruppe mit 1 bis 30 Kohlenstoffatomen;
wobei, wenn R⁵ ein Wasserstoffatom oder ein Methyl ist, mindestens eines von R³ und R⁴ kein Wasserstoffatom ist; und
wobei, wenn R⁵ eine n-Butylgruppe ist, mindestens eines von R³ und R⁴ kein Wasserstoffatom ist, oder das Polyaminoboran ein Massenmittel des Molekulargewichts größer oder gleich 500000 aufweist.

9. Polyaminoboran nach Anspruch 8, wobei das Polyaminoboran mindestens eine der folgenden Formeln hat:
[R⁵NH-BR³R⁴]ₙ, wobei n eine Zahl größer als 10 ist; und
[R⁵NH-BR³R⁴]ₘ[R⁶NH-BR³R⁴]₍ₙ₋ₘ₎, wobei n eine Zahl größer als 10 und m eine Zahl größer oder gleich 10 und kleiner als n ist; wobei R⁶ von R⁵ verschieden ist und R⁶ ausgewählt ist aus der Gruppe bestehend aus einem Wasserstoffatom, einem substituierten oder unsubstituierten Stickstoffatom und einer linearen, verzweigten, cyclischen oder cyclischen und verzweigten organischen Gruppe mit 1 bis 30 Kohlenstoffatomen; und wobei, wenn R⁵ ein Methyl ist, mindestens eines von R³ und R⁴ kein Wasserstoffatom ist oder R⁶ kein Wasserstoff oder n-Butyl ist.

10. Polyaminoboran nach Anspruch 8 oder Anspruch 9, wobei mindestens eines von R³ und R⁴ ein Wasserstoffatom ist.

11. Polyaminoboran nach einem der Ansprüche 8 bis 10, wobei mindestens eines von R⁵ und R⁶ ausgewählt ist aus der Gruppe bestehend aus einem Wasserstoffatom, einem substituierten oder unsubstituierten Stickstoffatom, einem Methyl, einem Ethyl, einem n-Propyl, einem n-Butyl, einem substituierten oder unsubstituierten Allyl, einem substituierten oder unsubstituierten Propargyl und einer linearen, verzweigten, cyclischen oder cyclischen und verzweigten organische Gruppe mit 3 bis 24 Kohlenstoffatomen substituiert mit mindestens einer Alken-, Alkin-, Ether-, Thioether-, sekundären Amin-, Phosphin- und/oder Silyl-Gruppe.

12. Verwendung eines Polyaminoborans nach einem der Ansprüche 8 bis 11 zur Herstellung eines Keramikvorläufers oder einer Keramik, zur Herstellung von Bornitrid oder zur Lagerung und/oder Herstellung von Wasserstoff.

13. Keramikvorläufer oder Keramik, umfassend ein Polyaminoboran nach einem der Ansprüche 8 bis 11.

14. Wasserstoffzelle oder energetisches Material, umfassend ein Polyaminoboran nach einem der Ansprüche 8 bis 11.

## Claims

1. A process for preparing a polyaminoborane comprising reacting at least one monomer with an aminoborane, wherein the at least one monomer is selected from the group consisting of ammonia, a primary amine and a substituted or unsubstituted hydrazine; and wherein the aminoborane comprises a borane substituted by a secondary amino group,
wherein the aminoborane has the formula R¹R²N-BR³R⁴, the monomer has the formula R⁵NH₂ and the polyaminoborane has the formula [R⁵NH-BR³R⁴]ₙ,
wherein R¹ and R² are the same or different, linear, branched, cyclic or cyclic and branched organic groups having from 2 to 30 carbon atoms; or R¹ and R² together form a cyclic or cyclic and branched organic group having from 2 to 30 carbon atoms;
wherein R³ and R⁴ are the same or different and selected from the group consisting of a hydrogen atom, a substituted or unsubstituted heteroatom and a linear, branched, cyclic or cyclic and branched organic group having from 1 to 30 carbon atoms; or R³ and R⁴ together form a cyclic or cyclic and branched organic group having from 3 to 30 carbon atoms;
wherein R⁵ is selected from the group consisting of a hydrogen atom, a substituted or unsubstituted nitrogen atom and a linear, branched, cyclic or cyclic and branched organic group having from 1 to 30 carbon atoms; and
wherein n is a number greater than 10.

2. Process according to claim 1, wherein the aminoborane has the formula R¹R²N-BR³R⁴, a first monomer has the formula R⁵NH₂, a second monomer has the formula R⁶NH₂ and the polyaminoborane has the formula [R⁵NH-BR³R⁴]ₘ[R⁶NH-BR³R⁴]₍ₙ₋ₘ₎,
wherein R¹ and R² are the same or different, linear, branched, cyclic or cyclic and branched organic groups having from 2 to 30 carbon atoms; or R¹ and R² together form a cyclic or cyclic and branched organic group having from 2 to 30 carbon atoms;
wherein R³ and R⁴ are the same or different and selected from the group consisting of a hydrogen atom, a substituted or unsubstituted heteroatom and a linear, branched, cyclic or cyclic and branched organic group having from 1 to 30 carbon atoms; or R³ and R⁴ together form a cyclic or cyclic and branched organic group having from 3 to 30 carbon atoms;
wherein R⁵ and R⁶ are different and selected from the group consisting of a hydrogen atom, a substituted or unsubstituted nitrogen atom and a linear, branched, cyclic or cyclic and branched organic group having from 1 to 30 carbon atoms;
wherein n is a number greater than 10; and
wherein m is a number greater than or equal to 10 and less than n.

3. Process according to any of the preceding claims, wherein at least one of R¹ and R² is a branched, cyclic or cyclic and branched organic group having from 3 to 24 carbon atoms; or R¹ and R² together form a cyclic or cyclic and branched organic group having from 3 to 24 carbon atoms.

4. Process according to any of the preceding claims, wherein the secondary amino group has one of the following formulas: 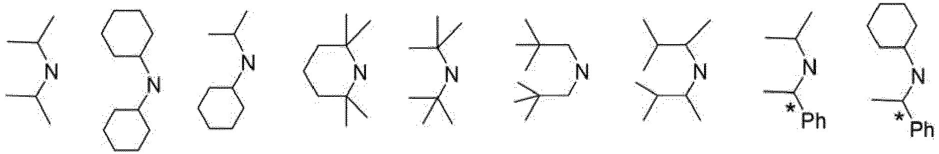 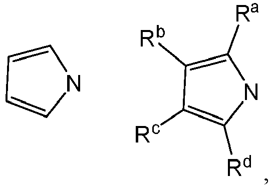 wherein R^{a} to R^{d} are independently selected from the group consisting of a hydrogen atom and hydrocarbon substituents.

5. Process according to any of the preceding claims, wherein the aminoborane is a diisopropylaminoborane.

6. Process according to any of the preceding claims, wherein at least one of R³ and R⁴ is a hydrogen atom.

7. Process according to any of the preceding claims, wherein at least one of R⁵ and R⁶ is selected from the group consisting of a hydrogen atom, a substituted or unsubstituted nitrogen atom, a methyl, ethyl, n-propyl, n-butyl, a substituted or unsubstituted allyl, a substituted or unsubstituted propargyl and a linear, branched, cyclic or cyclic and branched organic group having from 3 to 24 carbon atoms and substituted with at least one alkene, alkyne, ether, thioether, secondary amine, phosphine and/or silyl group.

8. A polyaminoborane comprising at least one repeating unit of formula R⁵NH-BR³R⁴, wherein R³ and R⁴ are the same or different and are selected from the group consisting of a hydrogen atom, a substituted or unsubstituted heteroatom and a linear, branched, cyclic or cyclic and branched organic group having from 1 to 30 carbon atoms; or R³ and R⁴ together form a cyclic or cyclic and branched organic group having from 3 to 30 carbon atoms; wherein R⁵ is selected from the group consisting of a hydrogen atom, a substituted or unsubstituted nitrogen atom and a linear, branched, cyclic or cyclic and branched organic group having from 1 to 30 carbon atoms;
- wherein if R⁵ is a hydrogen atom or a methyl group, at least one of R³ and R⁴ is not a hydrogen atom; and
- wherein if R⁵ is an n-butyl group, at least one of R³ and R⁴ is not a hydrogen atom, or the polyaminoborane has a mass average molecular weight greater than or equal to 500,000.

9. Polyaminoborane according to claim 8, wherein the polyaminoborane has at least one of the following formulas:
[R⁵NH-BR³R⁴]ₙ, wherein n is a number greater than 10; and
[R⁵NH-BR³R⁴]ₘ[R⁶NH-BR³R⁴]₍ₙ₋ₘ₎, wherein n is a number greater than 10 and m is a number greater than or equal to 10 and less than n; wherein R⁶ is different from R⁵ and R⁶ is selected from the group consisting of a hydrogen atom, a substituted or unsubstituted nitrogen atom and a linear, branched, cyclic or cyclic and branched organic group having from 1 to 30 carbon atoms; and wherein if R⁵ is methyl, at least one of R³ and R⁴ is not a hydrogen atom, or R⁶ is not a hydrogen atom or a n-butyl group.

10. Polyaminoborane according to claim 8 or claim 9, wherein at least one of R³ and R⁴ is a hydrogen atom.

11. Polyaminoborane according to any of claims 8 to 10, wherein at least one of R⁵ and R⁶ is selected from the group consisting of a hydrogen atom, a substituted or unsubstituted nitrogen atom, methyl, ethyl, n-propyl, n-butyl, substituted or unsubstituted allyl, a substituted or unsubstituted propargyl and a linear, branched, cyclic or cyclic and branched organic group having from 3 to 24 carbon atoms and substituted with at least one alkene, alkyne, ether, thioether, secondary amine, phosphine and/or silyl group.

12. Use of a polyaminoborane according to any of claims 8 to 11 for the preparation of a ceramic precursor or a ceramic, the production of boron nitride or the storage and/or production of dihydrogen.

13. Ceramic precursor or ceramic comprising a polyaminoborane according to any of claims 8 to 11.

14. Hydrogen fuel cell or energy material comprising a polyaminoborane according to any of claims 8 to 11.
